# EUROPEAN PATENT APPLICATION

(11) **EP 4 625 920 A1**
(43) Date of publication of application: **01.10.2025**
(21) Application number: 23894005.0
(22) Date of filing: 24.11.2023
(51) Int. Cl.: H04L 41/046

(54) **COMPUTING POWER NODE MANAGEMENT METHOD AND APPARATUS**

(30) Priority: 24.11.2022 CN 202211486213
(71) Applicant: Datang Mobile Communications Equipment Co., Ltd., Beijing 100085 (CN)
(72) Inventor: LIU, Xianfeng, Beijing 100085 (CN); WANG, Yapeng, Beijing 100085 (CN); GU, Xiaofei, Beijing 100085 (CN); HU, Weiqi, Beijing 100085 (CN)
(74) Representative: Studio Torta S.p.A.
(86) International application number: PCT/CN2023/133908
(87) International publication number: WO 2024/109916

(57) **Abstract**

Embodiments of the present disclosure provide a computing power node management method and apparatus. The method comprises: determining a change in the state of a computing power node, the state comprising a first state or a second state, the first state being used for representing that the computing power node provides a computing power service, and the second state being used for representing that the computing power node does not provide the computing power service; when it is determined that the computing power node enters the first state, moving the computing power node into an available computing power resource pool; and/or, when it is determined that the computing power node enters the second state, moving the computing power node into a backup computing power resource pool.

## Description

### CROSS-REFERENCES TO RELATED APPLICATIONS

The present application claims priority to Chinese patent application No. 202211486213.0 filed on November 24, 2022, entitled "Computing Power Node Management Method and Apparatus", which is hereby incorporated by reference in its entirety.

### FIELD

The present application relates to the field of communications, and in particular to a method and apparatus for computing power node management.

### BACKGROUND

In computing power network technology, a computing power node that may provide computing power services needs to be registered and authenticated on a computing power network management platform before providing computing power services. The computing power network management platform selects the computing power node during computing power scheduling only after obtaining a resource state and network state of the computing power node. In case that the computing power node stops providing computing power services, the computing power node may be deregistered from the computing power network management platform, and then the computing power network management platform no longer obtains the resource state and network state of the computing power node and the computing power node will not be scheduled subsequently.

In the related art, managements for computing power nodes include registration, authentication, deregistration and related operation administration and maintenance (OAM) operation and maintenance management requirements. In case that the computing power node temporarily or periodically stops providing computing power services, a deregistration procedure needs to be performed, and in case that the computing power node resumes computing power services, a registration and authentication procedure needs to be performed. Repeated deregistration, registration and authentication causes additional signaling overhead, resulting in waste of signaling resources and reduced system stability.

### BRIEF SUMMARY

Embodiments of the present application provide a method and apparatus for computing power node management, to solve a defect of waste of signaling resources caused by multiple registration, authentication and deregistration procedures of computing power nodes in the related art, to reduce signaling overhead and improve system stability.

An embodiment of the present application provides a method for computing power node management, performed by a computing power network management function, including:
determining a change of a state of a computing power node, where the state includes a first state or a second state, the first state is used to indicate that the computing power node provides computing power services, and the second state is used to indicate that the computing power node does not provide computing power services; and
in case of determining that the computing power node enters the first state, moving the computing power node to an available computing power resource pool; and/or, in case of determining that the computing power node enters the second state, moving the computing power node to a backup computing power resource pool;
where computing power nodes in the available computing power resource pool and computing power nodes in the backup computing power resource pool have completed registration in the computing power network management function, and the computing power nodes in the available computing power resource pool are used to provide computing power services.

In some embodiments, according to the method for computing power node management of an embodiment of the present application, determining the change of the state of the computing power node includes:
determining the change of the state of the computing power node based on computing power service condition information of the computing power node;
where the computing power service condition information of the computing power node is used to indicate at least one of the following:
   the computing power node provides computing power services during a computing power service validity period; or
   the computing power node provides computing power services within a computing power service validity area.

In some embodiments, according to the method for computing power node management of an embodiment of the present application, the computing power service validity period is determined based on at least one of the following:
a starting time of the computing power service validity period;
an ending time of the computing power service validity period;
a duration of the computing power service validity period;
a length of a computing power service cycle, where one computing power service cycle includes one computing power service validity period;
an interval length between any two adjacent computing power service cycles; or
a quantity of cycle times of a computing power service cycle.

In some embodiments, according to the method for computing power node management of an embodiment of the present application, in case of determining that the computing power node enters the first state, moving the computing power node to the available computing power resource pool includes one or more of the following: at the starting time of the computing power service validity period, moving the computing power node to the available computing power resource pool; or, at a starting time of the computing power service cycle, moving the computing power node to the available computing power resource pool;
and/or
in case of determining that the computing power node enters the second state, moving the computing power node to the backup computing power resource pool includes one or more of the following: in case that the computing power node completes registration in the computing power network management function but is not within the computing power service validity period, moving the computing power node to the backup computing power resource pool; at the ending time of the computing power service validity period, moving the computing power node to the backup computing power resource pool; or, at an ending time of the computing power service cycle, moving the computing power node to the backup computing power resource pool.

In some embodiments, according to the method for computing power node management of an embodiment of the present application, in case that the computing power service condition information of the computing power node is used to indicate that the computing power node provides computing power services within the computing power service validity area:
in case of determining that the computing power node enters the first state, moving the computing power node to the available computing power resource pool includes: in case that the computing power node enters the computing power service validity area, moving the computing power node to the available computing power resource pool;
   and/or
in case of determining that the computing power node enters the second state, moving the computing power node to the backup computing power resource pool includes one or more of the following: in case that the computing power node completes registration in the computing power network management function but is not within the computing power service validity area, moving the computing power node to the backup computing power resource pool; or, in case that the computing power node leaves the computing power service validity area, moving the computing power node from the available computing power resource pool to the backup computing power resource pool.

In some embodiments, according to the method for computing power node management of an embodiment of the present application, determining the change of the state of the computing power node includes:
receiving a node update request transmitted from the computing power node at a first time; and
based on the node update request, determining at least one of the following:
   state indication information, or a first buffer duration;
   where the state indication information is used to indicate that the computing power node starts to provide computing power services, or the computing power node stops providing computing power services.

In some embodiments, according to the method for computing power node management of an embodiment of the present application, in case of determining that the computing power node enters the first state, moving the computing power node to the available computing power resource pool includes: in case that the state indication information indicates that the computing power node starts to provide computing power services, moving the computing power node to the available computing power resource pool;
and/or
in case of determining that the computing power node enters the second state, moving the computing power node to the backup computing power resource pool includes: in case that the state indication information indicates that the computing power node stops providing computing power services, moving the computing power node to the backup computing power resource pool.

In some embodiments, according to the method for computing power node management of an embodiment of the present application, the method further includes:
determining a buffer period.

In some embodiments, according to the method for computing power node management of an embodiment of the present application, moving the computing power node to the backup computing power resource pool includes:
in case that the buffer period ends, moving the computing power node to the backup computing power resource pool.

In some embodiments, according to the method for computing power node management of an embodiment of the present application, determining the buffer period includes:
determining a first time as a starting time of the buffer period, and determining a first buffer duration as a duration of the buffer period.

In some embodiments, according to the method for computing power node management of an embodiment of the present application, determining the buffer period includes:
obtaining a second buffer duration based on computing tasks of the computing power node;
transmitting node update response information to the computing power node, where the node update response information is at least used to indicate the second buffer duration;
receiving, at a second time, node update confirmation information transmitted from the computing power node, where the node update confirmation information is at least used to indicate a third buffer duration, and the third buffer duration is determined based on the second buffer duration; and
determining a first time or the second time as a starting time of the buffer period, and determining the third buffer duration as a duration of the buffer period.

An embodiment of the present application provides a computing power network management function, including: a memory, a transceiver and a processor;
where the memory is used for storing a computer program; the transceiver is used for receiving and transmitting data under control of the processor; and the processor is used for reading the computer program in the memory and performing the following operations:
determining a change of a state of a computing power node, where the state includes a first state or a second state, the first state is used to indicate that the computing power node provides computing power services, and the second state is used to indicate that the computing power node does not provide computing power services; and
in case of determining that the computing power node enters the first state, moving the computing power node to an available computing power resource pool; and/or, in case of determining that the computing power node enters the second state, moving the computing power node to a backup computing power resource pool;
where computing power nodes in the available computing power resource pool and computing power nodes in the backup computing power resource pool have completed registration in the computing power network management function, and the computing power nodes in the available computing power resource pool are used to provide computing power services.

In some embodiments, according to the computing power node management function of an embodiment of the present application, determining the change of the state of the computing power node includes:
determining the change of the state of the computing power node based on computing power service condition information of the computing power node;
where the computing power service condition information of the computing power node is used to indicate at least one of the following:
   the computing power node provides computing power services during a computing power service validity period; or
   the computing power node provides computing power services within a computing power service validity area.

In some embodiments, according to the computing power node management function of an embodiment of the present application, the computing power service validity period is determined based on at least one of the following:
a starting time of the computing power service validity period;
an ending time of the computing power service validity period;
a duration of the computing power service validity period;
a length of a computing power service cycle, where one computing power service cycle includes one computing power service validity period;
an interval length between any two adjacent computing power service cycles; or
a quantity of cycle times of a computing power service cycle.

In some embodiments, according to the computing power node management function of an embodiment of the present application, in case of determining that the computing power node enters the first state, moving the computing power node to the available computing power resource pool includes one or more of the following: at the starting time of the computing power service validity period, moving the computing power node to the available computing power resource pool; or, at a starting time of the computing power service cycle, moving the computing power node to the available computing power resource pool;
and/or
in case of determining that the computing power node enters the second state, moving the computing power node to the backup computing power resource pool includes one or more of the following: in case that the computing power node completes registration in the computing power network management function but is not within the computing power service validity period, moving the computing power node to the backup computing power resource pool; at the ending time of the computing power service validity period, moving the computing power node to the backup computing power resource pool; or, at an ending time of the computing power service cycle, moving the computing power node to the backup computing power resource pool.

In some embodiments, according to the computing power node management function of an embodiment of the present application, in case that the computing power service condition information of the computing power node is used to indicate that the computing power node provides computing power services within the computing power service validity area:
in case of determining that the computing power node enters the first state, moving the computing power node to the available computing power resource pool includes: in case that the computing power node enters the computing power service validity area, moving the computing power node to the available computing power resource pool;
   and/or
in case of determining that the computing power node enters the second state, moving the computing power node to the backup computing power resource pool includes one or more of the following: in case that the computing power node completes registration in the computing power network management function but is not within the computing power service validity area, moving the computing power node to the backup computing power resource pool; or, in case that the computing power node leaves the computing power service validity area, moving the computing power node from the available computing power resource pool to the backup computing power resource pool.

In some embodiments, according to the computing power node management function of an embodiment of the present application, determining the change of the state of the computing power node includes:
receiving a node update request transmitted from the computing power node at a first time; and
based on the node update request, determining at least one of the following:
   state indication information, or a first buffer duration;
   where the state indication information is used to indicate that the computing power node starts to provide computing power services, or the computing power node stops providing computing power services.

In some embodiments, according to the computing power node management function of an embodiment of the present application, in case of determining that the computing power node enters the first state, moving the computing power node to the available computing power resource pool includes: in case that the state indication information indicates that the computing power node starts to provide computing power services, moving the computing power node to the available computing power resource pool;
and/or
in case of determining that the computing power node enters the second state, moving the computing power node to the backup computing power resource pool includes: in case that the state indication information indicates that the computing power node stops providing computing power services, moving the computing power node to the backup computing power resource pool.

In some embodiments, according to the computing power node management function of an embodiment of the present application, the operations further include:
determining a buffer period.

In some embodiments, according to the computing power node management function of an embodiment of the present application, moving the computing power node to the backup computing power resource pool includes:
in case that the buffer period ends, moving the computing power node to the backup computing power resource pool.

In some embodiments, according to the computing power node management function of an embodiment of the present application, determining the buffer period includes:
determining a first time as a starting time of the buffer period, and determining a first buffer duration as a duration of the buffer period.

In some embodiments, according to the computing power node management function of an embodiment of the present application, determining the buffer period includes:
obtaining a second buffer duration based on computing tasks of the computing power node;
transmitting node update response information to the computing power node, where the node update response information is at least used to indicate the second buffer duration;
receiving, at a second time, node update confirmation information transmitted from the computing power node, where the node update confirmation information is at least used to indicate a third buffer duration, and the third buffer duration is determined based on the second buffer duration; and
determining a first time or the second time as a starting time of the buffer period, and determining the third buffer duration as a duration of the buffer period.

An embodiment of the present application provides an apparatus for computing power node management, including:
a state determining module, used for determining a change of a state of a computing power node, where the state includes a first state or a second state, the first state is used to indicate that the computing power node provides computing power services, and the second state is used to indicate that the computing power node does not provide computing power services; and
a node moving module, used for moving the computing power node to an available computing power resource pool in case of determining that the computing power node enters the first state; and/or, moving the computing power node to a backup computing power resource pool in case of determining that the computing power node enters the second state;
where computing power nodes in the available computing power resource pool and computing power nodes in the backup computing power resource pool have completed registration in a computing power network management function, and the computing power nodes in the available computing power resource pool are used to provide computing power services.

In some embodiments, according to the apparatus for computing power node management of an embodiment of the present application, the state determining module is used for:
determining the change of the state of the computing power node based on computing power service condition information of the computing power node;
where the computing power service condition information of the computing power node is used to indicate at least one of the following:
   the computing power node provides computing power services during a computing power service validity period; or
   the computing power node provides computing power services within a computing power service validity area.

In some embodiments, according to the apparatus for computing power node management of an embodiment of the present application, the computing power service validity period is determined based on at least one of the following:
a starting time of the computing power service validity period;
an ending time of the computing power service validity period;
a duration of the computing power service validity period;
a length of a computing power service cycle, where one computing power service cycle includes one computing power service validity period;
an interval length between any two adjacent computing power service cycles; or
a quantity of cycle times of a computing power service cycle.

In some embodiments, according to the apparatus for computing power node management of an embodiment of the present application, the node moving module is used for performing at least one of the following:
in case that the computing power node completes registration in the computing power network management function but is not within the computing power service validity period, moving the computing power node to the backup computing power resource pool;
at the starting time of the computing power service validity period, moving the computing power node to the available computing power resource pool;
at the ending time of the computing power service validity period, moving the computing power node to the backup computing power resource pool;
at a starting time of the computing power service cycle, moving the computing power node to the available computing power resource pool; or
at an ending time of the computing power service cycle, moving the computing power node to the backup computing power resource pool.

In some embodiments, according to the apparatus for computing power node management of an embodiment of the present application, in case that the computing power service condition information of the computing power node is used to indicate that the computing power node provides computing power services within the computing power service validity area, the node moving module is used for performing one or more of the following:
in case that the computing power node completes registration in the computing power network management function but is not within the computing power service validity area, moving the computing power node to the backup computing power resource pool;
in case that the computing power node enters the computing power service validity area, moving the computing power node to the available computing power resource pool; or
in case that the computing power node leaves the computing power service validity area, moving the computing power node from the available computing power resource pool to the backup computing power resource pool.

In some embodiments, according to the apparatus for computing power node management of an embodiment of the present application, the state determining module is used for:
receiving a node update request transmitted from the computing power node at a first time; and
based on the node update request, determining at least one of the following:
   state indication information, or a first buffer duration;
   where the state indication information is used to indicate that the computing power node starts to provide computing power services, or the computing power node stops providing computing power services.

In some embodiments, according to the apparatus for computing power node management of an embodiment of the present application, the node moving module is used for:
in case that the state indication information indicates that the computing power node starts to provide computing power services, moving the computing power node to the available computing power resource pool;
   and/or
in case that the state indication information indicates that the computing power node stops providing computing power services, moving the computing power node to the backup computing power resource pool.

In some embodiments, according to the apparatus for computing power node management of an embodiment of the present application, the apparatus further includes:
a buffer period determining module, used for determining a buffer period.

In some embodiments, according to the apparatus for computing power node management of an embodiment of the present application, the node moving module is used for:
in case that the buffer period ends, moving the computing power node to the backup computing power resource pool.

In some embodiments, according to the apparatus for computing power node management of an embodiment of the present application, the buffer period determining module is used for:
determining a first time as a starting time of the buffer period, and determining a first buffer duration as a duration of the buffer period.

In some embodiments, according to the apparatus for computing power node management of an embodiment of the present application, the buffer period determining module is used for:
obtaining a second buffer duration based on computing tasks of the computing power node;
transmitting node update response information to the computing power node, where the node update response information is at least used to indicate the second buffer duration;
receiving, at a second time, node update confirmation information transmitted from the computing power node, where the node update confirmation information is at least used to indicate a third buffer duration, and the third buffer duration is determined based on the second buffer duration; and
determining a first time or the second time as a starting time of the buffer period, and determining the third buffer duration as a duration of the buffer period.

An embodiment of the present application further provides a processor readable storage medium, where the processor readable storage medium stores a computer program, and the computer program is used for causing a processor to perform steps of any of the methods for computing power node management described above.

In the method and apparatus for computing power node management provided by the embodiments of the present application, in case that the state of the computing power node changes, if it is determined that the computing power node may provide computing power services, the computing power node is moved to the available computing power resource pool; in case that the state of the computing power node changes, if it is determined that the computing power node cannot provide computing power services, the computing power node is moved to the backup computing power resource pool. As such, in case that the state of the computing power node changes or changes multiple times, there is no need to repeatedly perform the deregistration, registration and authentication procedures, which reduces signaling overhead, saves signaling resources, and improves system stability.

### BRIEF DESCRIPTION OF THE DRAWINGS

To clearly illustrate the solutions in the embodiments of the present application or in the related art, the drawings used in the description of the embodiments or the related art are briefly described below. The drawings in the following description are only some embodiments of the present application, and other drawings may be obtained according to these drawings without any creative effort for those skilled in the art.
FIG. 1 is a schematic flowchart of computing power node registration and authentication according to the related art;
FIG. 2 is a schematic flowchart of computing power node deregistration according to the related art;
FIG. 3 is a first schematic flowchart of a method for computing power node management according to an embodiment of the present application;
FIG. 4 is a second schematic flowchart of a method for computing power node management according to an embodiment of the present application;
FIG. 5 is a third schematic flowchart of a method for computing power node management according to an embodiment of the present application;
FIG. 6 is a fourth schematic flowchart of a method for computing power node management according to an embodiment of the present application;
FIG. 7 is a fifth schematic flowchart of a method for computing power node management according to an embodiment of the present application;
FIG. 8 is a sixth schematic flowchart of a method for computing power node management according to an embodiment of the present application;
FIG. 9 is a seventh schematic flowchart of a method for computing power node management according to an embodiment of the present application;
FIG. 10 is an eighth schematic flowchart of a method for computing power node management according to an embodiment of the present application;
FIG. 11 is a ninth schematic flowchart of a method for computing power node management according to an embodiment of the present application;
FIG. 12 is a schematic structural diagram of a computing power network management function according to an embodiment of the present application; and
FIG. 13 is a schematic structural diagram of an apparatus for computing power node management according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

Embodiments of the present application provide a method and apparatus for computing power node management, to reduce signaling overhead and reduce signaling pressure.

The method and the apparatus are based on the same concept, and since the method and apparatus solve problems in similar principles, the implementations of the apparatus and method may be referred to each other, and the same details are not repeated.

The solutions according to the embodiments of the present application may be applicable to various systems, especially 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The following contents are firstly introduced.

A computing power aware network needs to support registrations of computing power nodes in the entire network. A computing power management platform (computing power network management function) transmits configurations of respective computing power nodes, including a notification policy of computing power information, and an allocation and scheduling policy of services among computing power nodes. The computing power management platform needs to support a registration function for computing power node. The specific technologies that need to be met are as follows:
after the computing power node goes online, the computing power node transmits a registration request to the computing power management platform, where the registration request carries computing power enabling information;
the computing power management platform transmits information required for registration to the computing power node, where the information required for registration includes device identification information, access router identification information, and resources such as computing power node position information, certificate of certification authority (CA) for computing power node, etc.;
the computing power management platform transmits the computing power node identification information to the computing power node; and
the computing power management platform transmits a configuration policy, where the configuration policy includes a computing power node information notification policy, a computing power node capability template, a computing power operation, and configuration information associated with maintaining and managing operation administration and maintenance (OAM).

After the computing power node is registered, the management platform may store the computing power node and subscribe to/receive real-time update information of the computing power, and then a computing power routing node transmits computing power node information, and the computing power routing node lists and configures a corresponding routing notification policy.

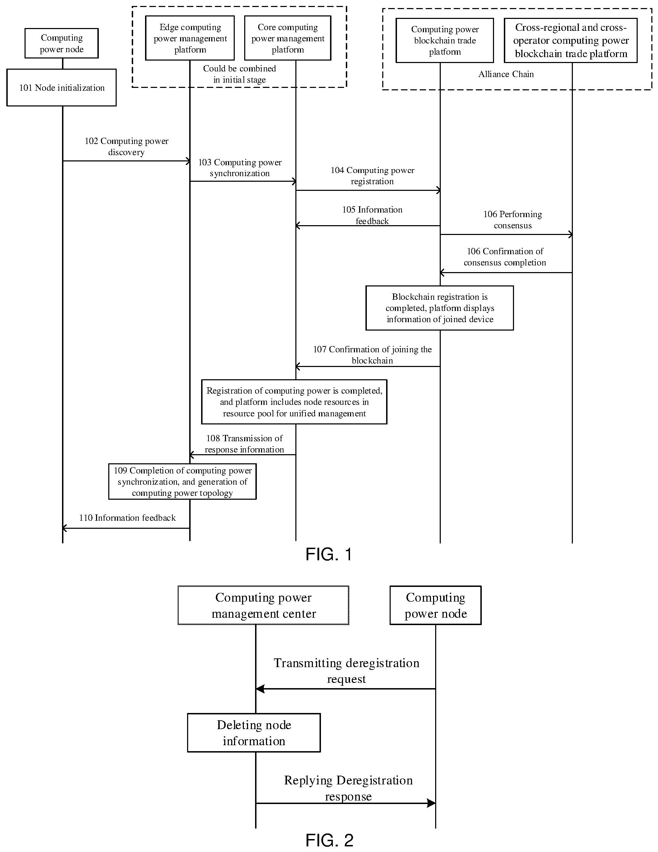

FIG. 1 is a schematic flowchart of computing power node registration and authentication according to the related art. As shown in FIG. 1, the procedure includes the following steps.

Step 101, node initialization.

In some embodiments, a computing power node may first complete initialization.

Step 102, computing power discovery.

In some embodiments, the computing power node may report its resource state and network state, and issue request information to join a blockchain.

Step 103, computing power synchronization.

In some embodiments, an edge computing power management platform may synchronize access information of the computing power node with a core computing power management platform, and forward the request message of the computing power node to join the blockchain.

Step 104, computing power registration.

In some embodiments, the core computing power management platform may transmit computing power registration information and request a computing power trade platform to perform node CA authorization.

Step 105, information feedback.

In some embodiments, the computing power trade platform may feed back CA authorization information.

Step 106, consensus completion.

In some embodiments, the computing power trade platform may initiate blockchain consensus and complete consensus, and then the computing power trade platform may display device joining information.

Step 107, confirmation of joining the blockchain.

In some embodiments, the computing power trade platform may return information indicating successful registration to the computing power management platform.

Step 108, transmission of response information.

In some embodiments, the core computing power management platform may transmit response information to the edge computing power management platform to confirm that the computing power node joins the blockchain and the computing power node registration is completed, and synchronize a CA certificate.

Step 109, completion of computing power synchronization.

In some embodiments, the computing power management platform may generate a computing power topology.

Step 110, information feedback.

In some embodiments, the computing power management platform may feed back registration success information to the computing power node.

FIG. 2 is a schematic flowchart of computing power node deregistration according to the related art. As shown in FIG. 2, the procedure includes the following steps.

The computing power node may first transmit a deregistration request to the computing power management center (computing power network management function), carrying a computing power node identification; then, the computing power management center may delete information associated with the computing power node and reply with a deregistration response.

To summarize, a deregistration procedure needs to be performed in case that the computing power node suspends computing power services, and a registration and authentication procedure needs to be performed in case that the computing power node resumes computing power services. Repeated deregistration, registration and authentication causes additional signaling overhead, resulting in waste of signaling resources. In particular, in case that there are a large number of computing power nodes, frequent deregistration, registration and authentication causes signaling pressure on the computing power network management function.

Embodiments of the present application provide a method and apparatus for computing power node management, to save signaling resources and improve system stability.

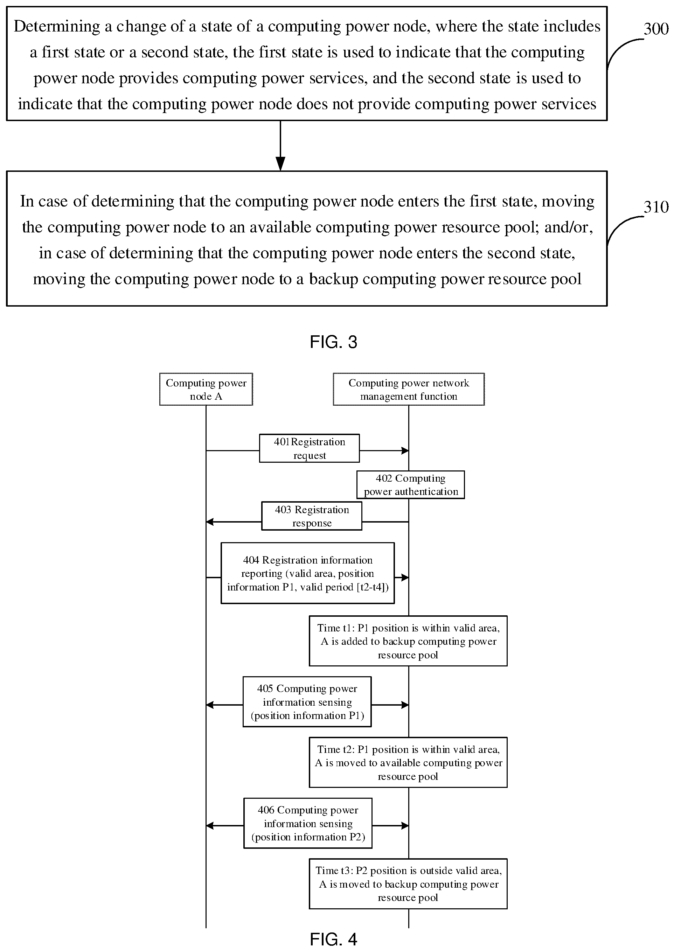

FIG. 3 is a first schematic flowchart of a method for computing power node management according to an embodiment of the present application. As shown in FIG. 3, an execution subject of the method may be a computing power network management function, and the method includes the following steps:
step 300, determining a change of a state of a computing power node, where the state includes a first state or a second state, the first state is used to indicate that the computing power node provides computing power services, and the second state is used to indicate that the computing power node does not provide computing power services; and
step 310, in case of determining that the computing power node enters the first state, moving the computing power node to an available computing power resource pool; and/or, in case of determining that the computing power node enters the second state, moving the computing power node to a backup computing power resource pool;
where computing power nodes in the available computing power resource pool and computing power nodes in the backup computing power resource pool have completed registration in the computing power network management function, and the computing power nodes in the available computing power resource pool are used to provide computing power services.

In some embodiments, a platform corresponding to the computing power network management function may be a computing power network management center. The computing power network management center complies with a computing power network architecture and may achieve computing power network management.

In some embodiments, the computing power network management function may set up the available computing power resource pool and the backup computing power resource pool.

In some embodiments, in case that the computing power network management function receives a computing power demand, the computing power network management function may schedule computing power nodes in the available computing power resource pool (computing power nodes in the available computing power resource pool may be scheduled, while computing power nodes in the backup computing power resource pool are not scheduled).

In some embodiments, the computing power node may be a core data center, an edge data center, a smart terminal, a personal computer (PC) device, etc., which is not limited in the embodiments of the present application.

In some embodiments, the computing power node may be in the first state of providing computing power services, or may be in the second state of stopping or suspending providing computing power services.

In some embodiments, in case that the computing power node is in the first state of providing computing power services, the computing power node may be moved to the available computing power resource pool.

In some embodiments, in case that the computing power node is in the second state of stopping or suspending providing computing power services, the computing power node may be moved to the backup computing power resource pool.

In some embodiments, in case that it is determined that the computing power node enters the first state, the computing power node may be added to the available computing power resource pool; in case that it is determined that the computing power node enters the second state, the computing power node is moved to the backup computing power resource pool.

In some embodiments, the computing power node includes a computing power node that has completed a registration and authentication procedure in the computing power network management function. In case that the computing power node is moved to the available computing power resource pool, there is no need to perform the registration and authentication procedure again; or, in case that the computing power node is moved to the backup computing power resource pool, there is no need to perform a deregistration procedure.

In some embodiments, the computing power network management function may be a physical device on a network side that may implement computing power network management.

In some embodiments, the computing power network management function may be a functional module on a network side that may implement computing power network management.

In some embodiments, the computing power network management function may be a combined device on a network side that may implement computing power network management.

In some embodiments, before providing computing power services, the computing power node may complete registration and authentication in the computing power network management function. After obtaining a resource state and a network state of the computing power node, the computing power network management function may select the computing power node from the available computing power resource pool during computing power scheduling, which not only ensures that the scheduled computing power node may provide computing power services, but also ensures that the computing power node that is temporarily unable to provide computing power services does not have to frequently perform deregistration, registration and authentication procedures.

In the method for computing power node management provided by the embodiment of the present application, in case that the state of the computing power node changes, if it is determined that the computing power node may provide computing power services, the computing power node is moved to the available computing power resource pool; in case that the state of the computing power node changes, if it is determined that the computing power node cannot provide computing power services, the computing power node is moved to the backup computing power resource pool. As such, in case that the state of the computing power node changes or changes multiple times, there is no need to repeatedly perform the deregistration, registration and authentication procedures, which reduces signaling overhead, saves signaling resources, and improves system stability.

In some embodiments, determining the change of the state of the computing power node includes:
determining the change of the state of the computing power node based on computing power service condition information of the computing power node;
where the computing power service condition information of the computing power node is used to indicate at least one of the following:
   the computing power node provides computing power services during a computing power service validity period; or
   the computing power node provides computing power services within a computing power service validity area.

In some embodiments, a valid period during which the computing power node may provide computing power services may be predefined or preset through a protocol, or determined based on an indication from a higher layer, or determined by default.

In some embodiments, in case that a certain time is within the computing power service validity period, it may be determined that the computing power node may provide computing power services at that time (the computing power node is in the first state).

In some embodiments, in case that a certain time is outside the computing power service validity period, it may be determined that the computing power node suspends or stops providing computing power services at that time (the computing power node is in the second state).

In some embodiments, in case that a current position of the computing power node is within the computing power service validity area, it may be determined that the computing power node may provide computing power services at that position (the computing power node is in the first state).

In some embodiments, in case that a current position of the computing power node is outside the computing power service validity area, it may be determined that the computing power node suspends or stops providing computing power services at that position (the computing power node is in the second state).

In some embodiments, in case that a certain time is within the computing power service validity period and a current position of the computing power node is within the computing power service validity area, it may be determined that the computing power node may provide computing power services at that position and at that time (the computing power node is in the first state).

In some embodiments, in case that a certain time is within the computing power service validity period and a current position of the computing power node is outside the computing power service validity area, it may be determined that the computing power node suspends or stops providing computing power services at that position and at that time (the computing power node is in the second state).

In some embodiments, in case that a certain time is outside the computing power service validity period and a current position of the computing power node is within the computing power service validity area, it may be determined that the computing power node suspends or stops providing computing power services at that position and at that time (the computing power node is in the second state).

In some embodiments, in case that a certain time is outside the computing power service validity period and a current position of the computing power node is outside the computing power service validity area, it may be determined that the computing power node suspends or stops providing computing power services at that position and at that time (the computing power node is in the second state).

In some embodiments, the computing power node may carry condition information for providing computing power services during a registration procedure.

In some embodiments, the condition information may be a computing power node validity period.

In some embodiments, the condition information may be a computing power node validity area.

In some embodiments, the condition information may be a computing power node validity period and a computing power node validity area.

In some embodiments, the computing power network management function may add the computing power node to the available computing power resource pool or the backup computing power resource pool for management based on position information of the computing power node and a current time.

In some embodiments, in case that the computing power node does not carry condition information for providing computing power services, it is determined that the computing power node is available and the computing power node may be added to the available computing power resource pool.

In some embodiments, the computing power network management function may sense the position information of computing power nodes in the available computing power resource pool and computing power nodes in the backup computing power resources pool in real time or periodically.

In some embodiments, the computing resource pool to which the computing node belongs may be adjusted based on the position information of the computing node and the current time.

In some embodiments, the computing power network management function may adjust the computing power resource pool to which the computing power node belongs based on the computing power service validity period and the computing power service validity area.

FIG. 4 is a second schematic flowchart of a method for computing power node management according to an embodiment of the present application. As shown in FIG. 4, the method includes the following steps.

Step 401, registration request.

In some embodiments, the computing power node may transmit a registration request to the computing power network management function.

Step 402, computing power authentication.

In some embodiments, the computing power network management function may perform a computing power authentication procedure.

Step 403, registration response.

In some embodiments, in case that the computing power authentication is passed, the computing power network management function may return a computing power registration response to the computing power node.

Step 404, registration information reporting.

In some embodiments, the computing power node may report computing power registration information to the computing power network management function, where the computing power registration information includes a computing power service validity area, current position information P1 of the computing power node, and a computing power service validity period [t2-t4], and the computing power node is successfully registered.

In some embodiments, in case that a certain time is outside the computing power service validity period, and a current position of the computing power node is within the computing power service validity area, it may be determined that the computing power node suspends or stops providing computing power services at that position and at that time (the computing power node is in the second state), and the computing power node is added to the backup computing power resource pool for management.

In some embodiments, the computing power service validity area may be a geographical location expressed in longitude and latitude, or a geographical location expressed in a coordinate system, which is not limited in the embodiments of the present application.

In some embodiments, at time t1 (t1<t2), the P1 position is within the valid area, and then the computing power node may be added to the backup computing power resource pool for management.

Step 405, computing power information sensing.

In some embodiments, in case that a certain time is within the computing power service validity period, and it is determined, through a computing power information sensing report received by the computing power network management function, that the current position of the computing power node is not changed, that is, the computing power node is always in the computing power service validity area, then it may be determined that the computing power node may provide computing power services at that position and at that time (the computing power node is in the first state), and the computing power node is moved to the available computing power resource pool for management.

In some embodiments, at time t2, the P1 position is within the valid area, and the computing power node may be moved to the available computing power resource pool for management.

Step 406, computing power information sensing.

In some embodiments, in case that a certain time is within the computing power service validity period, the computing power management center determines current position information P2 of the computing power node based on collected computing power information of the computing power node, and determines that the computing power node has currently moved out of the valid area, then it may be determined that the computing power node at that position and at that time suspends or stops providing computing power services (the computing power node is in the second state), and the computing power node is moved to the backup computing power resource pool.

In some embodiments, at time t3 (t2<t3<t4), the P2 position is outside the valid area, and the computing power node may be moved to the backup computing power resource pool.

In the method for computing power node management provided by the embodiment of the present application, whether the computing power node is within the computing power service validity period and/or whether the computing power node is within the computing power service validity area is determined. As such, the change of the state of the computing power node is determined based on the time and current position of the computing power node, which provides a preparation for the subsequent update of the computing power resource pool to which the computing power node belongs.

In some embodiments, the computing power service validity period is determined based on at least one of the following:
a starting time of the computing power service validity period;
an ending time of the computing power service validity period;
a duration of the computing power service validity period;
a length of a computing power service cycle, where one computing power service cycle includes one computing power service validity period;
an interval length between any two adjacent computing power service cycles; or
a quantity of cycle times of a computing power service cycle.

In some embodiments, the starting time of the computing power service validity period may be 8:00, 8:21, or 10:00, which is not limited in the embodiments of the present application.

In some embodiments, the ending time of the computing power service validity period may be 12:00, 12:44, or 16:45, which is not limited in the embodiments of the present application.

In some embodiments, the duration of the computing power service validity period may be 1 hour, 2.5 hours, or 6 hours, which is not limited in the embodiments of the present application.

In some embodiments, the length of the computing power service cycle may be 2 hours, 3.5 hours, or 8 hours, which is not limited in the embodiments of the present application.

In some embodiments, the interval length between any two adjacent computing power service cycles may be 0.5 hours, 1 hour, or 2 hours, which is not limited in the embodiments of the present application.

In some embodiments, the quantity of cycle times of the computing power service cycle may be 2 times, 5 times, or 7 times, which is not limited in the embodiments of the present application.

In some embodiments, the length of the computing power service cycle may be the same as the duration of the computing power service validity period.

In some embodiments, the computing power service validity period may be determined based on the starting time of the computing power service validity period and the ending time of the computing power service validity period.

In some embodiments, based on the starting time 8:00 of the computing power service validity period and the ending time 9:20 of the computing power service validity period, it may be determined that the computing power service validity period is [8:00-9:20].

In some embodiments, based on the starting time 8:34 of the computing power service validity period and the ending time 11:20 of the computing power service validity period, it may be determined that the computing power service validity period is [8:34-11:20].

In some embodiments, the computing power service validity period may be determined based on the starting time of the computing power service validity period and the duration of the computing power service validity period.

In some embodiments, based on the starting time 8:34 of the computing power service validity period and the duration being 1 hour of the computing power service validity period, it may be determined that the computing power service validity period is [8:34-9:34].

In some embodiments, based on the starting time 13:22 of the computing power service validity period and the duration being 3 hours of the computing power service validity period, it may be determined that the computing power service validity period is [13:22-16:22].

In some embodiments, the computing power service validity period may be determined based on the duration of the computing power service validity period and the ending time of the computing power service validity period.

In some embodiments, based on the duration being 3 hours of the computing power service validity period and the ending time 9:20 of the computing power service validity period, it may be determined that the computing power service validity period is [6:20-9:20].

In some embodiments, based on the duration being 5.5 hours of the computing power service validity period and the ending time 16:20 of the computing power service validity period, it may be determined that the computing power service validity period is [10:50-16:20].

In some embodiments, the computing power service validity period may be determined based on the starting time of the computing power service validity period, the ending time of the computing power service validity period, and the duration of the computing power service validity period.

In some embodiments, based on the starting time 5:00 of the computing power service validity period, the ending time 9:00 of the computing power service validity period, and the duration being 4 hours of the computing power service validity period, it may be determined that the computing power service validity period is [5:00-9:00].

In some embodiments, based on the starting time 6:00 of the computing power service validity period, the ending time 12:00 of the computing power service validity period, and the duration being 6 hours of the computing power service validity period, it may be determined that the computing power service validity period is [6:00-12:00].

In some embodiments, the computing power service validity period may be determined based on the starting time of the computing power service validity period, the ending time of the computing power service validity period, the interval length between any two adjacent computing power service cycles, and the quantity of cycle times of the computing power service cycle.

In some embodiments, based on the starting time 6:30 of the computing power service validity period, the corresponding ending time 8:30 of the computing power service validity period, the interval length being 1 hour between any two adjacent computing power service cycles, and the quantity of cycle times being 2 times of the computing power service cycle, it may be determined that the computing power service validity periods are [6:30-8:30] and [9:30-11:30].

In some embodiments, based on the starting time 8:20 of the computing power service validity period, the corresponding ending time 9:20 of the computing power service validity period, the interval length being 2 hours between any two adjacent computing power service cycles, and the quantity of cycle times being 3 times of the computing power service cycle, it may be determined that the computing power service validity periods are [8:20-9:20], [11:20-12:20] and [14:20-15:20].

In some embodiments, based on the starting time 6:30 of the computing power service validity period, the corresponding ending time 8:30 of the computing power service validity period, the interval length being 24 hours between any two adjacent computing power service cycles, and the quantity of cycle times being 1 time per day of the computing power service cycle, it may be determined that the computing power service validity period is [6:30-8:30] every day.

In some embodiments, the computing power service validity period may be determined based on the starting time of the computing power service validity period, the duration of the computing power service validity period, the interval length between any two adjacent computing power service cycles, and the quantity of cycle times of the computing power service cycle.

In some embodiments, based on the starting time 6:00 of the computing power service validity period, the duration being 2 hours of the computing power service validity period, the interval length being 1 hour between any two adjacent computing power service cycles, and the quantity of cycle times being 2 times of the computing power service cycle, it may be determined that the computing power service validity periods are [6:00-8:00] and [9:00-11:00].

In some embodiments, based on the starting time 7:00 of the computing power service validity period, the duration being 3 hours of the computing power service validity period, the interval length being 2 hours between any two adjacent computing power service cycles and the quantity of cycle times being 3 times of the computing power service cycle, it may be determined that the computing power service validity periods are [7:00-10:00], [12:00-15:00] and [17:00-20:00].

In some embodiments, based on the starting time 6:00 of the computing power service validity period, the duration being 2 hours of the computing power service validity period, the interval length being 24 hours between any two adjacent computing power service cycles, and the quantity of cycle times being 1 time per day of the computing power service cycle, it may be determined that the computing power service validity period is [6:00-8:00] every day.

In some embodiments, the computing power service validity period may be determined based on the duration of the computing power service validity period, the ending time of the computing power service validity period, the interval length between any two adjacent computing power service cycles, and the quantity of cycle times of the computing power service cycle.

In some embodiments, based on the duration being 2 hours of the computing power service validity period, the ending time 15:00 of the first cycle computing power service validity period, the interval length being 1 hour between any two adjacent computing power service cycles, and the quantity of cycle times being 2 times of the computing power service cycle, it may be determined that the computing power service validity periods are [13:00-15:00] and [16:00-18:00].

In some embodiments, based on the duration being 3 hours of the computing power service validity period, the ending time 12:00 of the first cycle computing power service validity period, the interval length being 2 hours between any two adjacent computing power service cycles, and the quantity of cycle times being 3 times of the computing power service cycle, it may be determined that the computing power service validity periods are [9:00-12:00], [14:00-17:00] and [19:00-22:00].

In some embodiments, based on the duration being 2 hours of the computing power service validity period, the ending time 15:00 of the computing power service validity period, the interval length being 24 hours between any two adjacent computing power service cycles, and the quantity of cycle times being 1 time per day of the computing power service cycle, it may be determined that the computing power service validity period is [13:00-15:00] every day.

In some embodiments, the computing power service validity period may be determined based on the starting time of the computing power service validity period, the length of the computing power service cycle, the interval length between any two adjacent computing power service cycles, and the quantity of cycle times of the computing power service cycle.

In some embodiments, based on the starting time 8:34 of the computing power service validity period, the length being 1 hour of the computing power service cycle, the interval length being 2 hours between any two adjacent computing power service cycles and the quantity of cycle times being 2 times of the computing power service cycle, it may be determined that the computing power service validity periods are [8:34-9:34] and [11:34-12:34].

In some embodiments, based on the starting time 12:12 of the computing power service validity period, the length being 3 hours of the computing power service cycle, the interval length being 0.5 hours between any two adjacent computing power service cycles and the quantity of cycle times being 3 times of the computing power service cycle, it may be determined that the computing power service validity periods are [12:12-15:12], [15:42-18:42] and [19:12-22:12].

In some embodiments, based on the starting time 8:34 of the computing power service validity period, the length being 1 hour of the computing power service cycle, the interval length being 24 hours between any two adjacent computing power service cycles, and the quantity of cycle times being 1 time per day of the computing power service cycle, it may be determined that the computing power service validity period is [8:34-9:34] every day.

In some embodiments, the computing power service validity period may be determined based on the length of the computing power service cycle, the interval length between any two adjacent computing power service cycles, the quantity of cycle times of the computing power service cycle, and the ending time of the computing power service validity period.

In some embodiments, based on the length being 1 hour of the computing power service cycle, the interval length being 3 hours between any two adjacent computing power service cycles, the number of cycles being 2 times of the computing power service cycle, and the ending time 11:20 of the first cycle computing power service validity period, it may be determined that the computing power service validity periods are [10:20-11:20] and [14:20-15:20].

In some embodiments, based on the length being 1.5 hours of the computing power service cycle, the interval length being 2 hours between any two adjacent computing power service cycles, the quantity of cycle times being 3 times of the computing power service cycle, and the ending time 13:20 of the first cycle computing power service validity period, it may be determined that the computing power service validity periods are [11:50-13:20], [15:20-16:50] and [18:50-20:20].

In some embodiments, based on the length being 1 hour of the computing power service cycle, the interval length being 3 hours between any two adjacent computing power service cycles, the quantity of cycle times being 2 times of the computing power service cycle, and the ending time 11:20 of the first cycle computing power service validity period, it may be determined that the computing power service validity periods are [10:20-11:20] and [14:20-15:20].

In some embodiments, based on the length being 1 hour of the computing power service cycle, the interval length being 24 hours between any two adjacent computing power service cycles, the quantity of cycle times being 1 time per day of the computing power service cycle, and the ending time 11:20 of the first cycle computing power service validity period, it may be determined that the computing power service validity period is [10:20-11:20] every day.

In some embodiments, the computing power service validity period may be determined based on the starting time of the computing power service validity period, the ending time of the computing power service validity period, the duration of the computing power service validity period, the interval length between any two adjacent computing power service cycles, and the quantity of cycle times of the computing power service cycle.

In some embodiments, based on the starting time 6:00 of the computing power service validity period, the corresponding ending time 10:00 of the computing power service validity period, the duration being 1 hour of the computing power service validity period, the interval length being 2 hours between any two adjacent computing power service cycles and the quantity of cycle times being 2 times of the computing power service cycle, it may be determined that the computing power service validity periods are [6:00-7:00] and [9:00-10:00].

In some embodiments, based on the starting time 9:00 of the computing power service validity period, the corresponding ending time 16:00 of the computing power service validity period, the duration being 2 hours of the computing power service validity period, the interval length being 0.5 hours between any two adjacent computing power service cycles and the quantity of cycle times being 3 times of the computing power service cycle, it may be determined that the computing power service validity periods are [9:00-11:00], [11:30-13:30] and [14:00-16:00].

In some embodiments, based on the starting time 6:00 of the computing power service validity period, the corresponding ending time 7:00 of the computing power service validity period, the duration being 1 hour of the computing power service validity period, the interval length being 24 hours between any two adjacent computing power service cycles, and the quantity of cycle times being 1 time per day of the computing power service cycle, it may be determined that the computing power service validity period is [6:00-7:00] every day.

In some embodiments, the computing power service validity period may be determined based on the starting time of the computing power service validity period, the ending time of the computing power service validity period, the length of the computing power service cycle, the interval length between any two adjacent computing power service cycles, and the quantity of cycle times of the computing power service cycle.

In some embodiments, based on the starting time 6:00 of the computing power service validity period, the corresponding ending time 8:30 of the computing power service validity period, the length being 1 hour of the computing power service cycle, the interval length being 0.5 hours between any two adjacent computing power service cycles and the quantity of cycle times being 2 times of the computing power service cycle, it may be determined that the computing power service validity periods are [6:00-7:00] and [7:30-8:30].

In some embodiments, based on the starting time 9:00 of the computing power service validity period, the corresponding ending time 17:00 of the computing power service validity period, the length being 2 hours of the computing power service cycle, the interval length being 1 hour between any two adjacent computing power service cycles and the quantity of cycle times being 3 times of the computing power service cycle, it may be determined that the computing power service validity periods are [9:00-11:00], [12:00-14:00] and [15:00-17:00].

In some embodiments, based on the starting time 6:00 of the computing power service validity period, the corresponding ending time 7:00 of the computing power service validity period, the length being 1 hour of the computing power service cycle, the interval length being 24 hours between any two adjacent computing power service cycles, and the quantity of cycle times being 1 time per day of the computing power service cycle, it may be determined that the computing power service validity period is [6:00-7:00] every day.

In some embodiments, the computing power service validity period may be determined based on the starting time of the computing power service validity period, the ending time of the computing power service validity period, the duration of the computing power service validity period, the length of the computing power service cycle, the interval length between any two adjacent computing power service cycles, and the quantity of cycle times of the computing power service cycle.

In some embodiments, based on the starting time 6:00 of the computing power service validity period of, the corresponding ending time 8:30 of the computing power service validity period, the duration being 1 hour of the computing power service validity period, the length being 1 hour of the computing power service cycle, the interval length being 0.5 hours between any two adjacent computing power service cycles and the quantity of cycle times being 2 times of the computing power service cycle, it may be determined that the computing power service validity periods are [6:00-7:00] and [7:30-8:30].

In some embodiments, based on the starting time 9:00 of the computing power service validity period, the corresponding ending time 8:30 of the computing power service validity period, the duration being 2 hours of the computing power service validity period, the length being 2 hours of the computing power service cycle, the interval length being 1 hour between any two adjacent computing power service cycles and the quantity of cycle times being 3 times of the computing power service cycle, it may be determined that the computing power service validity periods are [9:00-11:00], [12:00-14:00] and [15:00-17:00].

In some embodiments, based on the starting time 6:00 of the computing power service validity period, the corresponding ending time 7:00 of the computing power service validity period, the duration being 1 hour of the computing power service validity period, the length being 1 hour of the computing power service cycle, the interval length being 24 hours between any two adjacent computing power service cycles, and the quantity of cycle times being 1 time per day of the computing power service cycle, it may be determined that the computing power service validity period is [6:00-7:00] every day.

In some embodiments, at the starting time of the computing power service validity period, it is determined that the computing power node may provide computing power services at this time (the computing power node enters the first state), and the computing power node may be moved to the available computing power resource pool.

In some embodiments, at the ending time of the computing power service validity period, it is determined that the computing power node suspends or stops providing computing power services at that time (the computing power node enters the second state), and the computing power node may be moved to the backup computing power resource pool.

In some embodiments, the computing power network management function may periodically adjust the computing power resource pool to which the computing power node belongs based on the duration of the computing power service validity period and the interval length between any two adjacent computing power service cycles.

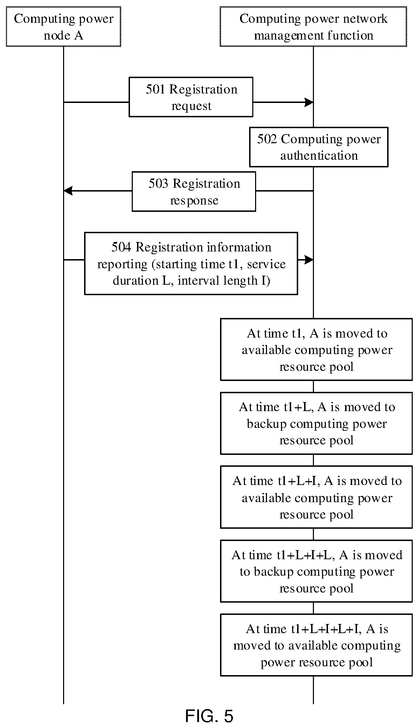

FIG. 5 is a third schematic flowchart of a method for computing power node management according to an embodiment of the present application. As shown in FIG. 5, the method includes the following steps.

Step 501, registration request.

In some embodiments, the computing power node may transmit a registration request to the computing power network management function.

Step 502, computing power authentication.

In some embodiments, the computing power network management function may perform a computing power authentication procedure.

Step 503, registration response.

In some embodiments, in case that the computing power authentication is passed, the computing power network management function may return a computing power registration response to the computing power node.

Step 504, registration information reporting.

In some embodiments, the computing power node may report computing power registration information to the computing power network management function, where the computing power registration information includes the starting time t1 of the periodic computing power service validity period of the computing power node, the duration L of the computing power service validity period, and the interval length I between any two adjacent computing power service cycles, and the computing power node is successfully registered.

In some embodiments, L may be 1 hour, or 2 hours, or 5 hours, which is not limited in the embodiments of the present application.

In some embodiments, I may be 1 hour, or 2 hours, or 5 hours, which is not limited in the embodiments of the present application.

In some embodiments, the computing power network management function may add the computing power node to the available computing power resource pool for management at time t1, move the computing power node to the backup computing power resource pool after the computing power node provides computing power service for a duration of L, and move the computing power node to the available computing power resource pool again after the computing power node stops the computing power service for a duration of I.

In some embodiments, at the starting time of the computing power service validity period, the computing power node determines that the computing power node may provide computing power services at that time (the computing power node is in the first state), and the computing power node may be moved to the available computing power resource pool.

In some embodiments, at the ending time of the computing power service validity period, the computing power node determines that the computing power node suspends or stops providing computing power services at that time (the computing power node is in the second state), and the computing power node may be moved to the backup computing power resource pool.

In some embodiments, at the starting time of the computing power service cycle, the computing node determines that the computing node may provide computing services at that time (the computing node is in the first state), and the computing node may be moved to the available computing resource pool.

In some embodiments, at the ending time of the computing power service cycle, the computing power node determines that the computing power node suspends or stops providing computing power services at that time (the computing power node is in the second state), and the computing power node may be moved to the backup computing power resource pool.

In the method for computing power node management provided by the embodiment of the present application, the periodic computing power service validity period is determined based on the starting time of the computing power service validity period, and/or the ending time of the computing power service validity period, and/or the duration of the computing power service validity period, and/or the length of the computing power service cycle, and/or the interval length between any two adjacent computing power service cycles, and/or the quantity of cycle times of the computing power service cycle, which provides a preparation for adjusting the resource pool to which the computing power node belongs in case that the computing power node periodically stops or resumes computing power services in the future.

In some embodiments, in case of determining that the computing power node enters the first state, moving the computing power node to the available computing power resource pool; and/or, in case of determining that the computing power node enters the second state, moving the computing power node to the backup computing power resource pool, includes at least one of the following:
in case that the computing power node completes registration in the computing power network management function but is not within a computing power service validity period, moving the computing power node to the backup computing power resource pool;
at a starting time of a computing power service validity period, moving the computing power node to the available computing power resource pool;
at an ending time of a computing power service validity period, moving the computing power node to the backup computing power resource pool;
at a starting time of a computing power service cycle, moving the computing power node to the available computing power resource pool; or
at an ending time of a computing power service cycle, moving the computing power node to the backup computing power resource pool.

In some embodiments, in case that a certain time is determined as the starting time of the computing power service validity period of the computing power node, the computing power node may be moved to the available computing power resource pool at that time.

In some embodiments, in case that a certain time is determined as the starting time of the computing power service validity period of the computing power node, and the computing power node is not in the available computing power resource pool, the computing power node may be moved to the available computing power resource pool at that time.

In some embodiments, in case that a certain time is determined as the starting time of the computing power service validity period of the computing power node, and the computing power node is in the backup computing power resource pool, the computing power node may be moved from the backup computing power resource pool to the available computing power resource pool at that time.

In some embodiments, the computing power network management function may adjust the computing power resource pool to which the computing power node belongs based on the computing power service validity period of the registration procedure.

In some embodiments, in case that the computing power node completes registration in the computing power network management function but is not within the computing power service validity period, the computing power node is moved to the backup computing power resource pool.

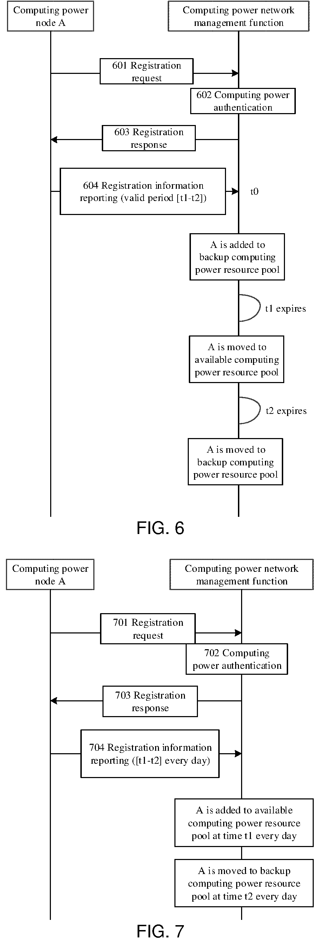

FIG. 6 is a fourth schematic flowchart of a method for computing power node management according to an embodiment of the present application. As shown in FIG. 6, the method includes the following steps.

Step 601, registration request.

In some embodiments, the computing power node may transmit a registration request to the computing power network management function.

Step 602, computing power authentication.

In some embodiments, the computing power network management function may perform a computing power authentication procedure.

Step 603, registration response.

In some embodiments, in case that the computing power authentication is passed, the computing power network management function may return a computing power registration response to the computing power node.

Step 604, registration information reporting.

In some embodiments, the computing power node may report computing power registration information to the computing power network management function at time t0 (t0<t1), where the computing power registration information includes a computing power service validity period [t1-t2]. In case that the computing power node is successfully registered, the computing power network management function adds the computing power node to the backup computing power resource pool for management.

In some embodiments, the computing power network management function may move the computing power node to the available resource pool for management at time t1, and move the computing power node to the backup computing power resource pool at time t2; the computing power management center may start a timer for the computing power node, or perform a scheduled scan, which is not limited in the embodiments of the present application.

In some embodiments, the computing power network management function may adjust the computing power resource pool to which the computing power node belongs based on the periodic computing power service validity period.

FIG. 7 is a fifth schematic flowchart of a method for computing power node management according to an embodiment of the present application. As shown in FIG. 7, the method includes the following steps.

Step 701, registration request.

In some embodiments, the computing power node may transmit a registration request to the computing power network management function.

Step 702, computing power authentication.

In some embodiments, the computing power network management function performs a computing power authentication procedure.

Step 703, registration response.

In some embodiments, in case that the computing power authentication is passed, the computing power network management function may return a computing power registration response to the computing power node.

Step 704, registration information reporting.

In some embodiments, the computing power node may report computing power registration information to the computing power network management function, where the computing power registration information includes the periodic computing power service validity period of the computing power node. The periodic computing power service validity period may be [t1-t2] every day. In case that the computing power node is successfully registered, the computing power network management function periodically adjusts the resource pool to which the computing power node belongs.

In some embodiments, the computing power node may be added to the available computing power resource pool for management at time t1 every day, and the computing power node may be moved to the backup computing power resource pool at time t2 every day.

In the method for computing power node management provided by the embodiment of the present application, the computing power node is moved to the available computing power resource pool at the starting time of the computing power service validity period, or the starting time of the computing power service cycle; and the computing power node is moved to the backup computing power resource pool at the ending time of the computing power service validity period, or the ending time of the computing power service cycle. As such, in case that the state of the computing power node changes or changes multiple times, there is no need to repeatedly perform the deregistration, registration and authentication procedures, which reduces signaling overhead, saves signaling resources, and improves system stability.

In some embodiments, in case that the computing power service condition information of the computing power node is used to represent that the computing power node provides computing power services within the computing power service validity area, in case of determining that the computing power node enters the first state, moving the computing power node to the available computing power resource pool; or, in case of determining that the computing power node enters the second state, moving the computing power node to the backup computing power resource pool includes:
in case that the computing power node completes registration in the computing power network management function but is not within the computing power service validity area, moving the computing power node to the backup computing power resource pool;
in case that the computing power node enters the computing power service validity area, moving the computing power node to the available computing power resource pool; and
in case that the computing power node leaves the computing power service validity area, moving the computing power node from the available computing power resource pool to the backup computing power resource pool.

In some embodiments, the computing power network management function may adjust the computing power resource pool to which the computing power node belongs based on the computing power service validity area.

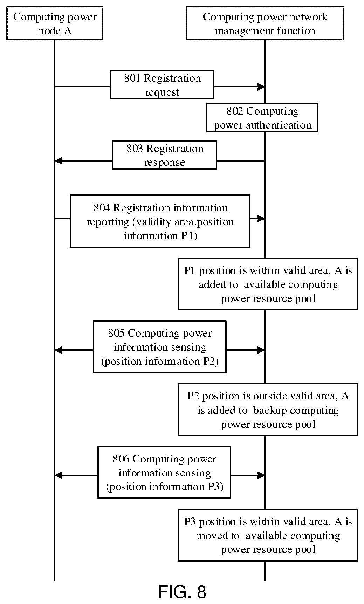

FIG. 8 is a sixth schematic flowchart of a method for computing power node management according to an embodiment of the present application. As shown in FIG. 8, the method includes the following steps.

Step 801, registration request.

In some embodiments, the computing power node may transmit a registration request to the computing power network management function.

Step 802, computing power authentication.

In some embodiments, the computing power network management function may perform a computing power authentication procedure.

Step 803, registration response.

In some embodiments, in case that the computing power authentication is passed, the computing power network management function may return a computing power registration response to the computing power node.

Step 804, registration information reporting.

In some embodiments, the computing power node may report computing power registration information to the computing power network management function, where the computing power registration information includes the computing power service validity area of the computing power node and the current position information P1 of the computing power node, and the computing power node is successfully registered.

In some embodiments, the computing power network management function determines that P1 is within the computing power service validity area and may add the computing power node to the available computing power resource pool for management.

Step 805, computing power information sensing.

In some embodiments, the computing power network management function may receive computing power information sensing report, obtain the current position information P2 of the computing power node, determine that the computing power node has currently moved out of the valid area, and move the computing power node to the backup computing power resource pool for management.

Step 806, computing power information sensing.

In some embodiments, the computing power management center may collect computing power information of the computing power node, where the computing power information includes the current position information P3 of the computing power node, determine that the computing power node has currently moved to the valid area, and move the computing power node to the available computing power resource pool.

In some embodiments, the current position of the computing power node is within the computing power service validity area, and it is determined that the computing power node may provide computing power services at that position (the computing power node is in the first state), and the computing power node may be moved to the available computing power resource pool.

In some embodiments, the current position of the computing power node is outside the computing power service validity area, and it is determined that the computing power node stops providing computing power services at that position (the computing power node is in the second state), and the computing power node may be moved to the backup computing power resource pool.

In the method for computing power node management provided by the embodiment of the present application, in case that the computing power node is within the computing power service validity area, it is determined that the computing power node may provide computing power services at that position, and the computing power node is moved to the available computing power resource pool; and in case that the computing power node is outside the computing power service validity area, it is determined that the computing power node stops providing computing power services at that position, and the computing power node is moved to the backup computing power resource pool. As such, in case that the position state of the computing power node changes, there is no need to repeatedly perform the deregistration, registration and authentication procedures, which reduces signaling overhead, saves signaling resources, and improves system stability.

In some embodiments, determining the change of the state of the computing power node includes:
receiving a node update request transmitted from the computing power node at a first time; and
based on the node update request, determining at least one of the following:
   state indication information, or a first buffer duration;
   where the state indication information is used to indicate that the computing power node starts to provide computing power services, or the computing power node stops providing computing power services.

In some embodiments, the first time may be 9:12, or 10:40, or 12:00, which is not limited in the embodiments of the present application.

In some embodiments, the first buffer duration may be 1 minute, or 2 minutes, or 5 minutes, which is not limited in the embodiments of the present application.

In some embodiments, the computing power node transmits the node update request to the computing power network management function, where the node update request may carry state indication information of stopping providing computing power services and the first buffer duration.

In some embodiments, the computing power node may carry condition information for providing computing power services during a node update procedure.

In some embodiments, the condition information may be a computing power node validity period.

In some embodiments, the condition information may be a computing power node validity area.

In some embodiments, the condition information may be a computing power node validity period and a computing power node validity area.

In some embodiments, the computing power network management function may add the computing power node to the available computing power resource pool or the backup computing power resource pool for management based on the position information of the computing power node and the current time.

In some embodiments, in case that the computing power node does not carry condition information for providing computing power services, it is determined that the computing power node is available and the computing power node may be added to the available computing power resource pool.

In some embodiments, the computing power network management function may adjust the computing power resource pool to which the computing power node belongs based on the computing power service validity period of the node update procedure.

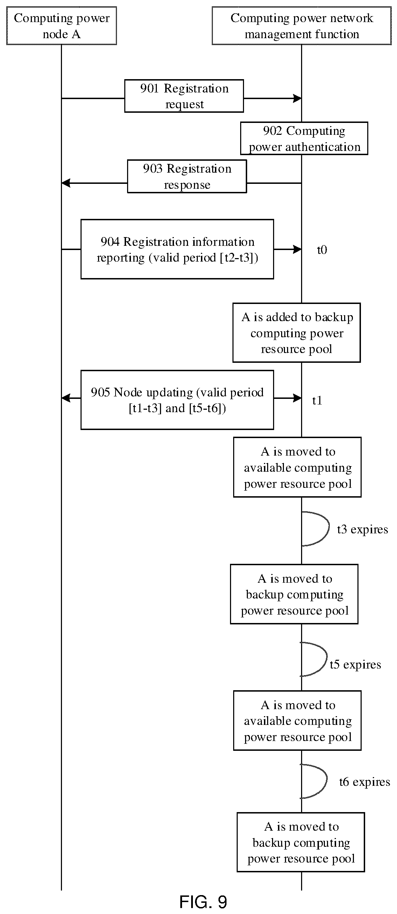

FIG. 9 is a seventh schematic flowchart of a method for computing power node management according to an embodiment of the present application. As shown in FIG. 9, the method includes the following steps.

Step 901, registration request.

In some embodiments, the computing power node may transmit a registration request to the computing power network management function.

Step 902, computing power authentication.

In some embodiments, the computing power network management function may perform a computing power authentication procedure.

Step 903, registration information reporting.

In some embodiments, in case that the computing power authentication is passed, the computing power network management function may return a computing power registration response to the computing power node.

Step 904, node updating.

In some embodiments, the computing power node reports registration information at time t0 (t0<t1<t2<t3<t5<t6), where the registration information may carry the computing power service validity period [t2-t3]. After the computing power node is successfully registered, the computing power node may be added to the backup computing power resource pool.

Step 905, node updating.

In some embodiments, the computing power node may initiate a node update procedure at any time after successful registration. The node updating may be initiated at time t1, carrying new computing power service validity periods [t1-t3] and [t5-t6]. The computing power network management function moves the computing power node to the available computing power resource pool for management at time t1.

In some embodiments, the computing power network management function may move the computing power node to the backup computing power resource pool at time t3, move the computing power node to the available computing power resource pool at time t5, and move the computing power node to the backup computing power resource pool again at time t6; the computing power management center may start a timer for the computing power node, or perform a scheduled scan, which is not limited in the embodiments of the present application.

In some embodiments, the computing power network management function receives a node update request transmitted from the computing power node at a first time, where the node update request carries state indication information indicating that computing power services may be provided, determines that the computing power node may provide computing power services at that time (the computing power node is in the first state), and may move the computing power node to the available computing power resource pool.

In some embodiments, the computing power network management function receives a node update request transmitted from the computing power node at a first time, where the node update request carries state indication information indicating that it is stopped providing computing power services and the first buffer duration, and determines that the computing power node suspends or stops providing computing power services at that time (the computing power node is in the second state).

In some embodiments, in case that both parties do not support buffering time negotiation, the computing power network management function may schedule computing tasks carried by the computing power node to other computing nodes for processing within the first buffer duration, and move the computing power node to the backup computing power resource pool after the first buffer duration expires.

In the method for computing power node management provided by the embodiment of the present application, the computing power network management function receives the node update request transmitted from the computing power node at the first time, determines the state indication information and/or the first buffer duration, and determines that the computing power node may provide computing power services at that time; or determines that the computing power node stops providing computing power services at that time. As such, in case that the computing power node stops providing computing power services, there is buffering time, and there is no need to repeatedly perform the deregistration, registration and authentication procedures, which reduces signaling overhead, saves signaling resources, and improves system stability.

In some embodiments, in case of determining that the computing power node enters the first state, moving the computing power node to the available computing power resource pool includes:
in case that the state indication information indicates that the computing power node starts to provide computing power services, moving the computing power node to the available computing power resource pool;
in case of determining that the computing power node enters the second state, moving the computing power node to the backup computing power resource pool includes:
   in case that the state indication information indicates that the computing power node stops providing computing power services, moving the computing power node to the backup computing power resource pool.

In some embodiments, the computing power node may carry an indication of whether to provide computing power services during the registration and node update procedures, and the indication may be state indication information.

In some embodiments, the computing power network management function may add the computing power node to the available computing power resource pool or the backup computing power resource pool for management based on the state indication information.

In some embodiments, in case that the computing power node does not carry state indication information during the registration and node update procedures, the computing power node is available and the computing power node may be added to the available computing power resource pool.

In some embodiments, the computing power network management function may adjust the computing power resource pool to which the computing power node belongs based on the state indication information of the node update procedure.

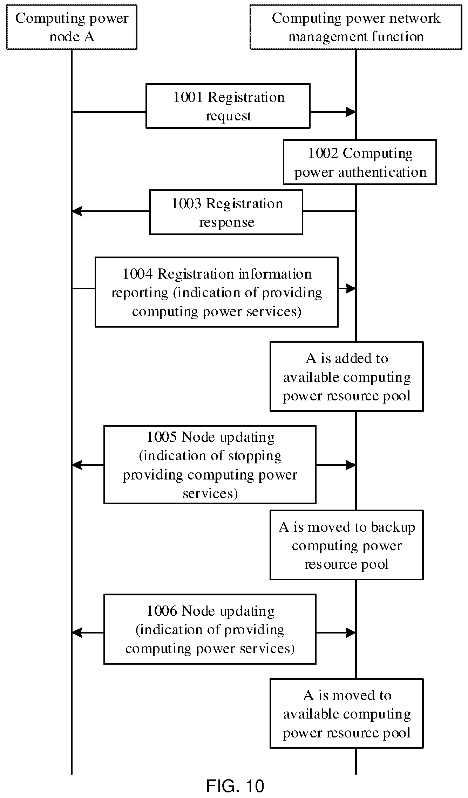

FIG. 10 is an eighth schematic flowchart of a method for computing power node management according to an embodiment of the present application. As shown in FIG. 10, the method includes the following steps.

Step 1001, registration request.

In some embodiments, the computing power node may transmit a registration request to the computing power network management function.

Step 1002, computing power authentication.

In some embodiments, the computing power network management function may perform a computing power authentication procedure.

Step 1003, registration response.

In some embodiments, in case that the computing power authentication is passed, the computing power network management function may return a computing power registration response to the computing power node.

Step 1004, registration information reporting.

In some embodiments, the computing power node may report computing power registration information to the computing power network management function, where the computing power registration information includes state indication information that the computing power node may provide computing power services. The computing power node is successfully registered, and the computing power network management function may add the computing power node to the available computing power resource pool for management.

Step 1005, node updating.

In some embodiments, the computing power network management function may receive a node update request that carries state indication information of stopping providing computing power services, and the computing power network management function may move the computing power node to the backup computing power resource pool for management.

Step 1006, node updating.

In some embodiments, the computing power network management function may receive a node update request carrying state indication information that computing power services may be provided, and the computing power network management function may move the computing power node to the available computing power resource pool.

In some embodiments, in case that the state indication information indicates that the computing power node starts to provide computing power services, it is determined that the computing power node may provide computing power services (the computing power node is in the first state), and the computing power node may be moved to the available computing power resource pool.

In some embodiments, in case that the state indication information indicates that the computing power node stops providing computing power services, it is determined that the computing power node stops providing computing power services (the computing power node is in the second state), and the computing power node may be moved to the backup computing power resource pool.

In the method for computing power node management provided by the embodiment of the present application, the computing power node is moved to the available computing power resource pool in case that the state indication information indicates that the computing power node starts to provide computing power services; and the computing power node is moved to the backup computing power resource pool in case that the state indication information indicates that the computing power node stops providing computing power services. As such, in case that the state of the computing power node changes or changes multiple times, there is no need to repeatedly perform the deregistration, registration and authentication procedures, which reduces signaling overhead, saves signaling resources, and improves system stability.

In some embodiments, the method further includes:
determining a buffer period.

In some embodiments, a node update request transmitted from the computing power node is received at a first time, and the node update request may carry state indication information of stopping providing computing power services and a first buffer duration.

In some embodiments, in case that both parties do not support buffer duration negotiation, the computing power network management function may schedule the computing tasks carried by the computing power node to other computing nodes for processing within the first buffer duration, and move the computing power node to the backup computing power resource pool after the first buffer duration expires.

In some embodiments, in case that both parties support buffer duration negotiation, the computing power network management function may determine a certain buffer duration based on the computing tasks currently carried by the computing power node, and carry the buffer duration when returning the node update response. In case that the node updating is confirmed, the negotiated buffer duration accepted by the computing power node is determined. After the buffer duration expires, the computing power node is moved to the backup computing power resource pool.

In some embodiments, in case that both parties support buffer duration negotiation, the buffer period may be determined based on the first time and the negotiated buffer duration accepted by the computing power node.

In some embodiments, in case that both parties do not support buffer duration negotiation, the buffer period may be determined based on the first time and a first buffer duration.

In some embodiments, the buffer period may be [9:00-9:05], or [9:42-9:45], or [11:20-11:30], which is not limited in the embodiments of the present application.

In some embodiments, before the computing power node suspends or stops providing computing power services, the computing power node may initiate a node update procedure to the computing power network management function, indicating that the computing power node is about to suspend or stop providing computing power services, and carrying a buffer duration (first buffer duration).

In the method for computing power node management provided by the embodiment of the present application, the buffer period is determined based on whether the computing power node and the computing power network management function support buffer duration negotiation in case that the computing power node is updated. In this way, in case that the computing power node has a short state change, there is no need to repeatedly perform the deregistration, registration and authentication procedures, which reduces signaling overhead, saves signaling resources, and improves system stability.

In some embodiments, moving the computing node to the backup computing power resource pool includes:
in case that the buffer period ends, moving the computing power node to the backup computing power resource pool.

In some embodiments, in case that the computing power node transmits the node update request, in case that both parties do not support buffer duration negotiation (for example, the buffer period is determined based on the first time and the first buffer duration), the computing power network management function may schedule the computing tasks carried by the computing power node to other computing nodes for processing within the buffer period, and move the computing power node to the backup computing power resource pool after the buffer period ends.

In some embodiments, in case that the computing power node transmits the node update request, in case that both parties support buffer duration negotiation (for example, the buffer period is determined based on the first time and the negotiated buffer duration accepted by the computing power node), the computing power network management function may move the computing power node to the backup computing power resource pool after the buffer period ends.

In the method for computing power node management provided by the embodiment of the present application, in case that the buffer period ends, the computing power node is moved to the backup computing power resource pool. As such, in case that the computing power node temporarily stops providing computing power services, there is no need to repeatedly perform the deregistration, registration and authentication procedures, which reduces signaling overhead, saves signaling resources, and improves system stability.

In some embodiments, determining the buffer period includes:
determining the first time as a starting time of the buffer period, and determining the first buffer duration as a duration of the buffer period.

In some embodiments, the computing power node initiates a node update request at the first time, carrying the state indication information of stopping providing computing power services and the first buffer duration. In case that the time elapsed from the first time is greater than the first buffer duration, the computing power network management function may move the computing power node to the backup computing power resource pool.

In some embodiments, in case that the time elapsed from the first time is less than the first buffer duration and the computing power node resumes to the state of providing computing power services, the computing power network management function may move the computing power node to the available computing power resource pool.

In the method for computing power node management provided by the embodiment of the present application, whether to move the computing power node to the backup computing power resource pool is determined by comparing the time elapsed from the first time with the first buffer duration. As such, in case that the computing power node temporarily stops providing computing power services, there is no need to repeatedly perform the deregistration, registration and authentication procedures, which reduces signaling overhead, saves signaling resources, and improves system stability.

In some embodiments, determining the buffer period includes:
obtaining a second buffer duration based on computing tasks of the computing power node;
transmitting node update response information to the computing power node, where the node update response information is at least used to indicate the second buffer duration;
receiving, at a second time, node update confirmation information transmitted from the computing power node, where the node update confirmation information is at least used to indicate a third buffer duration, and the third buffer duration is determined based on the second buffer duration; and
determining the first time or the second time as a starting time of the buffer period, and determining the third buffer duration as a duration of the buffer period.

In some embodiments, the second buffer duration may be 1 minute, 2 minutes, or 5 minutes, which is not limited in the embodiments of the present application.

In some embodiments, the second time may be 8:00, 9:00, or 12:00, which is not limited in the embodiments of the present application.

In some embodiments, the third buffer duration may be 1 minute, 2 minutes, or 5 minutes, which is not limited in the embodiments of the present application.

In some embodiments, in case that both parties support buffer duration negotiation, the computing power network management function may determine, based on the computing tasks currently carried by the computing power node, that the buffer duration is the second buffer duration. Within this buffer duration, the computing tasks carried on the computing power node may be smoothly scheduled to other computing nodes for processing.

In some embodiments, the computing power network management function returns the node update response to the computing power node, where the node update response carries the negotiated buffer duration, and the negotiated buffer duration may be the second buffer duration.

In some embodiments, the node update confirmation information transmitted from the computing power node is received at the second time, where the node update confirmation information carries the negotiated buffer duration, and the negotiated buffer duration may be the third buffer duration.

In some embodiments, the third buffer duration may be a buffer duration negotiated and accepted by the computing power node.

In some embodiments, the third buffer duration may be determined through negotiation with the computing power network management function based on the second buffer duration.

In some embodiments, in case that both parties do not support buffer duration negotiation, the starting time of the buffer period may be the first time.

In some embodiments, in case that both parties support negotiation of buffer duration, the starting time of the buffer period may be the second time.

In some embodiments, the duration of the buffer period may be the third buffer duration.

In some embodiments, after the third buffer duration expires, the computing power network management function may move the computing power node to the backup computing power resource pool.

In some embodiments, the computing power network management function may adjust the computing power resource pool to which the computing power node belongs based on the buffer duration negotiated during the node update procedure.

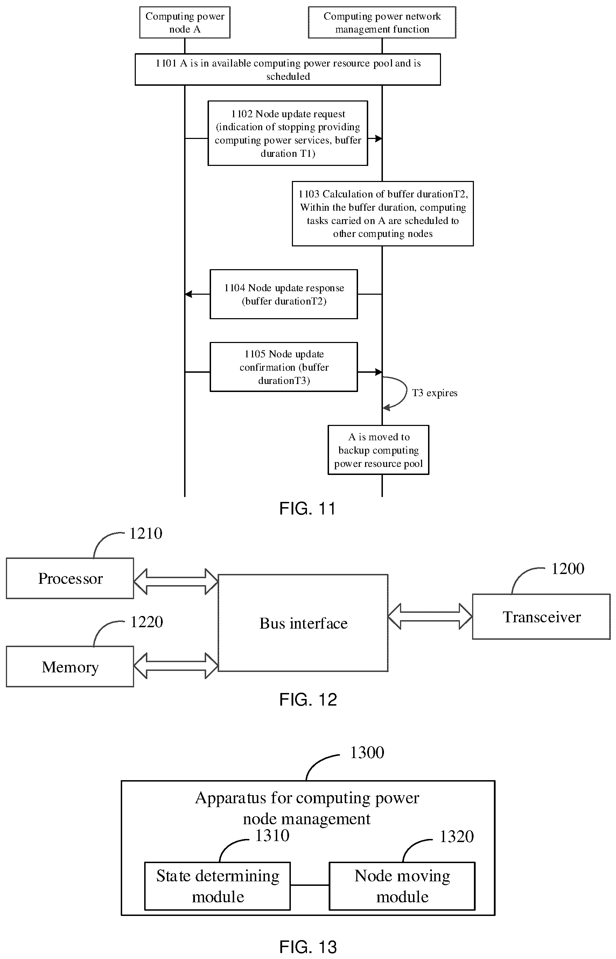

FIG. 11 is a ninth schematic flowchart of a method for computing power node management according to an embodiment of the present application. As shown in FIG. 11, the method includes the following steps.

Step 1101: the computing node is in the available computing resource pool and is scheduled.

In some embodiments, the computing power node may be registered in the computing power network management function, currently be in the available computing power resource pool, and be scheduled, and the scheduling may be to carry computing tasks.

Step 1102, node update request.

In some embodiments, the computing power node is about to stop providing computing power services, and may transmit a node update request to the computing power network management function, where the node update request carries the state indication information of stopping providing computing power services and the buffer duration T1.

Step 1103, buffer duration calculation.

In some embodiments, in case that the computing power network management function and the computing power node do not support buffer duration negotiation, the computing power network management function may schedule the computing tasks carried by the computing power node to other computing nodes for processing within the duration T1, and move the computing power node to the backup computing power resource pool after the duration T1 expires.

In some embodiments, in case that the computing power network management function and the computing power node support buffer duration negotiation, the computing power network management function may determine, based on the computing tasks currently carried by the computing power node, that the buffer duration is T2. Within the buffer duration, the computing tasks carried on the computing power node may be smoothly scheduled to other computing nodes for processing.

Step 1104, node update response.

In some embodiments, the computing power network management function may return a node update response to the computing power node, where the node update response carries a negotiated buffer duration T2, where T2 may be the buffer duration negotiated by the computing power network management function with the computing power node.

Step 1105, node update confirmation.

In some embodiments, the computing power node may transmit a stop node update confirmation to the computing power network management function, where the stop node update confirmation carries the negotiated buffer duration T3, where T3 may be the negotiated buffer duration accepted by the computing power node. After T3 expires, the computing power network management function moves the computing power node to the backup computing power resource pool.

In the method for computing power node management provided by the embodiment of the present application, the computing power resource pool to which the computing power node belongs is adjusted based on the buffer duration negotiated during the node update procedure. As such, in case that the computing power node temporarily stops providing computing power services, there is no need to repeatedly perform the deregistration, registration and authentication procedures, which reduces signaling overhead, saves signaling resources, and improves system stability.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

FIG. 12 is a schematic structural diagram of a computing power network management function according to an embodiment of the present application. As shown in FIG. 12, the computing power network management function includes a memory 1220, a transceiver 1200, and a processor 1210,
where the memory 1220 is used for storing a computer program; the transceiver 1200 is used for receiving and transmitting data under control of the processor 1210; and the processor 1210 is used for reading the computer program in the memory 1220 and performing the following operations:
determining a change of a state of a computing power node, where the state includes a first state or a second state, the first state is used to indicate that the computing power node provides computing power services, and the second state is used to indicate that the computing power node does not provide computing power services; and
in case of determining that the computing power node enters the first state, moving the computing power node to an available computing power resource pool; and/or, in case of determining that the computing power node enters the second state, moving the computing power node to a backup computing power resource pool;
where computing power nodes in the available computing power resource pool and computing power nodes in the backup computing power resource pool have completed registration in the computing power network management function, and the computing power nodes in the available computing power resource pool are used to provide computing power services.

In some embodiments, the transceiver 1200 is used for receiving and transmitting data under control of the processor 1210 .

In FIG. 12, a bus architecture may include any number of interconnected buses and bridges, which are linked together through various circuits of one or more processors represented by the processor 1210 and one or more memories represented by the memory 1220. The bus architecture may also link together various other circuits, such as peripherals, voltage regulators, and power management circuits, etc., which are well known in the art, and therefore are not further described in the present application. The bus interface provides an interface. The transceiver 1200 may include multiple elements, i.e., including a transmitter and a receiver, units for providing communication with various other devices over transmission media including wireless channels, wired channels, fiber optic cables, and the like. For different user devices, a user interface 1230 may be an interface that may be connected to external and internal devices, and the connected devices include but are not limited to keypads, displays, speakers, microphones, joysticks, etc.

The processor 1210 is responsible for managing the bus architecture and general processing, and the memory 1220 may store data used by the processor 1210 when performing operations.

In some embodiments, the processor 1210 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods provided by the embodiments of the present application according to the obtained executable instructions. The processor and the memory may also be arranged physically separately.

In some embodiments, the processor 1210 is used for:
determining the change of the state of the computing power node based on computing power service condition information of the computing power node;
where the computing power service condition information of the computing power node is used to indicate at least one of the following:
   the computing power node provides computing power services during a computing power service validity period; or
   the computing power node provides computing power services within a computing power service validity area.

In some embodiments, the computing power service validity period is determined based on at least one of the following:
a starting time of the computing power service validity period;
an ending time of the computing power service validity period;
a duration of the computing power service validity period;
a length of a computing power service cycle, where one computing power service cycle includes one computing power service validity period;
an interval length between any two adjacent computing power service cycles; or
a quantity of cycle times of a computing power service cycle.

In some embodiments, the processor 1210 is used for performing at least one of the following:
in case that the computing power node completes registration in the computing power network management function but is not within the computing power service validity period, moving the computing power node to the backup computing power resource pool;
at the starting time of the computing power service validity period, moving the computing power node to the available computing power resource pool;
at the ending time of the computing power service validity period, moving the computing power node to the backup computing power resource pool;
at a starting time of the computing power service cycle, moving the computing power node to the available computing power resource pool; or
at an ending time of the computing power service cycle, moving the computing power node to the backup computing power resource pool.

In some embodiments, in case that the computing power service condition information of the computing power node is used to indicate that the computing power node provides computing power services within the computing power service validity area, the processor 1210 is used for:
in case that the computing power node completes registration in the computing power network management function but is not within the computing power service validity area, moving the computing power node to the backup computing power resource pool;
in case that the computing power node enters the computing power service validity area, moving the computing power node to the available computing power resource pool; or
in case that the computing power node leaves the computing power service validity area, moving the computing power node from the available computing power resource pool to the backup computing power resource pool.

In some embodiments, the processor 1210 is used for:
receiving a node update request transmitted from the computing power node at a first time; and
based on the node update request, determining at least one of the following:
   state indication information, or a first buffer duration;
   where the state indication information is used to indicate that the computing power node starts to provide computing power services, or the computing power node stops providing computing power services.

In some embodiments, the processor 1210 is used for:
in case that the state indication information indicates that the computing power node starts to provide computing power services, moving the computing power node to the available computing power resource pool;
in case of determining that the computing power node enters the second state, moving the computing power node to the backup computing power resource pool includes:
   in case that the state indication information indicates that the computing power node stops providing computing power services, moving the computing power node to the backup computing power resource pool.

In some embodiments, the processor 1210 is used for:
determining a buffer period.

In some embodiments, the processor 1210 is used for:
in case that the buffer period ends, moving the computing power node to the backup computing power resource pool.

In some embodiments, the processor 1210 is used for:
determining a first time as a starting time of the buffer period, and determining a first buffer duration as a duration of the buffer period.

In some embodiments, the processor 1210 is used for:
obtaining a second buffer duration based on computing tasks of the computing power node;
transmitting node update response information to the computing power node, where the node update response information is at least used to indicate the second buffer duration;
receiving, at a second time, node update confirmation information transmitted from the computing power node, where the node update confirmation information is at least used to indicate a third buffer duration, and the third buffer duration is determined based on the second buffer duration; and
determining a first time or the second time as a starting time of the buffer period, and determining the third buffer duration as a duration of the buffer period.

It should be noted here that the above-mentioned computing power network management function provided by the embodiment of the present application may implement all the method steps implemented by the method embodiment in which the execution subject is the computing power network management function, and may achieve the same effects. The same parts and beneficial effects in the embodiments as those in the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

FIG. 13 is a schematic structural diagram of an apparatus for computing power node management according to an embodiment of the present application. As shown in FIG. 13, the apparatus 1300 includes:
a state determining module 1310, used for determining a change of a state of a computing power node, where the state includes a first state or a second state, the first state is used to indicate that the computing power node provides computing power services, and the second state is used to indicate that the computing power node does not provide computing power services; and
a node moving module 1320, used for moving the computing power node to an available computing power resource pool in case of determining that the computing power node enters the first state; and/or, moving the computing power node to a backup computing power resource pool in case of determining that the computing power node enters the second state;
where computing power nodes in the available computing power resource pool and computing power nodes in the backup computing power resource pool have completed registration in a computing power network management function, and the computing power nodes in the available computing power resource pool are used to provide computing power services.

It should be noted here that the above-mentioned apparatus provided by the embodiment of the present application may implement all the method steps implemented in the above-mentioned method embodiment, and may achieve the same effects. The same parts and beneficial effects in the embodiments as those in the method embodiments are not described in detail.

In some embodiments, the state determining module 1310 is used for:
determining the change of the state of the computing power node based on computing power service condition information of the computing power node;
where the computing power service condition information of the computing power node is used to indicate at least one of the following:
   the computing power node provides computing power services during a computing power service validity period; or
   the computing power node provides computing power services within a computing power service validity area.

In some embodiments, the computing power service validity period is determined based on at least one of the following:
a starting time of the computing power service validity period;
an ending time of the computing power service validity period;
a duration of the computing power service validity period;
a length of a computing power service cycle, where one computing power service cycle includes one computing power service validity period;
an interval length between any two adjacent computing power service cycles; or
a quantity of cycle times of a computing power service cycle.

In some embodiments, the node moving module 1320 is used for performing at least one of the following:
in case that the computing power node completes registration in the computing power network management function but is not within the computing power service validity period, moving the computing power node to the backup computing power resource pool;
at the starting time of the computing power service validity period, moving the computing power node to the available computing power resource pool;
at the ending time of the computing power service validity period, moving the computing power node to the backup computing power resource pool;
at a starting time of the computing power service cycle, moving the computing power node to the available computing power resource pool; or
at an ending time of the computing power service cycle, moving the computing power node to the backup computing power resource pool.

In some embodiments, in case that the computing power service condition information of the computing power node is used to indicate that the computing power node provides computing power services within the computing power service validity area, the node moving module 1320 is used for performing one or more of the following:
in case that the computing power node completes registration in the computing power network management function but is not within the computing power service validity area, moving the computing power node to the backup computing power resource pool;
in case that the computing power node enters the computing power service validity area, moving the computing power node to the available computing power resource pool; or
in case that the computing power node leaves the computing power service validity area, moving the computing power node from the available computing power resource pool to the backup computing power resource pool.

In some embodiments, the state determining module 1310 is used for:
receiving a node update request transmitted from the computing power node at a first time; and
based on the node update request, determining at least one of the following:
   state indication information, or a first buffer duration;
   where the state indication information is used to indicate that the computing power node starts to provide computing power services, or the computing power node stops providing computing power services.

In some embodiments, the node moving module 1320 is used for:
in case that the state indication information indicates that the computing power node starts to provide computing power services, moving the computing power node to the available computing power resource pool;
   and/or
in case that the state indication information indicates that the computing power node stops providing computing power services, moving the computing power node to the backup computing power resource pool.

In some embodiments, the apparatus 1300 further includes:
a buffer period determining module, used for determining a buffer period.

In some embodiments, the node moving module 1320 is used for:
in case that the buffer period ends, moving the computing power node to the backup computing power resource pool.

In some embodiments, the buffer period determining module is used for:
determining a first time as a starting time of the buffer period, and determining a first buffer duration as a duration of the buffer period.

In some embodiments, the buffer period determining module is used for:
obtaining a second buffer duration based on computing tasks of the computing power node;
transmitting node update response information to the computing power node, where the node update response information is at least used to indicate the second buffer duration;
receiving, at a second time, node update confirmation information transmitted from the computing power node, where the node update confirmation information is at least used to indicate a third buffer duration, and the third buffer duration is determined based on the second buffer duration; and
determining a first time or the second time as a starting time of the buffer period, and determining the third buffer duration as a duration of the buffer period.

An embodiment of the present application further provides a processor readable storage medium, where the processor readable storage medium stores a computer program, the computer program is used for causing a processor to perform the methods provided in the above embodiments, including:
determining a change of a state of a computing power node, where the state includes a first state or a second state, the first state is used to indicate that the computing power node provides computing power services, and the second state is used to indicate that the computing power node does not provide computing power services; and
in case of determining that the computing power node enters the first state, moving the computing power node to an available computing power resource pool; and/or, in case of determining that the computing power node enters the second state, moving the computing power node to a backup computing power resource pool;
where computing power nodes in the available computing power resource pool and computing power nodes in the backup computing power resource pool have completed registration in the computing power network management function, and the computing power nodes in the available computing power resource pool are used to provide computing power services.

The processor readable storage medium may be any available medium or data storage device that may be accessed by the processor, including but not limited to magnetic storage (such as floppy disks, hard disks, magnetic tapes, magneto-optical disks (MO)), optical storage (such as CDs, DVDs, BDs, HVDs, etc.), and semiconductor storage (such as ROM, EPROM, EEPROM, non-volatile memory (NAND FLASH), solid-state drives (SSDs)), etc.

As will be appreciated by those skilled in the art, embodiments of the present application may be provided as methods, systems, or computer program products. Therefore, the present application may take the form of an entirely hardware embodiment, an entirely software embodiment, or an embodiment combining software and hardware. Moreover, the present application may take the form of a computer program product implemented on one or more computer-usable storage media having computer-usable program code, including but not limited to disk storage and optical storage, etc.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for computing power node management, performed by a computing power network management function, comprising:
determining a change of a state of a computing power node, wherein the state comprises a first state or a second state, the first state is used to indicate that the computing power node provides computing power services, and the second state is used to indicate that the computing power node does not provide computing power services; and
in case of determining that the computing power node enters the first state, moving the computing power node to an available computing power resource pool; and/or, in case of determining that the computing power node enters the second state, moving the computing power node to a backup computing power resource pool;
wherein computing power nodes in the available computing power resource pool and computing power nodes in the backup computing power resource pool have completed registration in the computing power network management function, and the computing power nodes in the available computing power resource pool are used to provide computing power services.

2. The method of claim 1, wherein determining the change of the state of the computing power node comprises:
determining the change of the state of the computing power node based on computing power service condition information of the computing power node;
wherein the computing power service condition information of the computing power node is used to indicate at least one of the following:
the computing power node provides computing power services during a computing power service validity period; or
the computing power node provides computing power services within a computing power service validity area.

3. The method of claim 2, wherein the computing power service validity period is determined based on at least one of the following:
a starting time of the computing power service validity period;
an ending time of the computing power service validity period;
a duration of the computing power service validity period;
a length of a computing power service cycle, wherein one computing power service cycle comprises one computing power service validity period;
an interval length between any two adjacent computing power service cycles; or
a quantity of cycle times of a computing power service cycle.

4. The method of claim 3, wherein in case of determining that the computing power node enters the first state, moving the computing power node to the available computing power resource pool comprises one or more of the following: at the starting time of the computing power service validity period, moving the computing power node to the available computing power resource pool; or, at a starting time of the computing power service cycle, moving the computing power node to the available computing power resource pool;
and/or
in case of determining that the computing power node enters the second state, moving the computing power node to the backup computing power resource pool comprises one or more of the following: in case that the computing power node completes registration in the computing power network management function but is not within the computing power service validity period, moving the computing power node to the backup computing power resource pool; at the ending time of the computing power service validity period, moving the computing power node to the backup computing power resource pool; or, at an ending time of the computing power service cycle, moving the computing power node to the backup computing power resource pool.

5. The method of claim 2, wherein in case that the computing power service condition information of the computing power node is used to indicate that the computing power node provides computing power services within the computing power service validity area:
in case of determining that the computing power node enters the first state, moving the computing power node to the available computing power resource pool comprises: in case that the computing power node enters the computing power service validity area, moving the computing power node to the available computing power resource pool;
and/or
in case of determining that the computing power node enters the second state, moving the computing power node to the backup computing power resource pool comprises one or more of the following: in case that the computing power node completes registration in the computing power network management function but is not within the computing power service validity area, moving the computing power node to the backup computing power resource pool; or, in case that the computing power node leaves the computing power service validity area, moving the computing power node from the available computing power resource pool to the backup computing power resource pool.

6. The method of claim 1, wherein determining the change of the state of the computing power node comprises:
receiving a node update request transmitted from the computing power node at a first time; and
based on the node update request, determining at least one of the following:
state indication information, or a first buffer duration;
wherein the state indication information is used to indicate that the computing power node starts to provide computing power services, or the computing power node stops providing computing power services.

7. The method of claim 6, wherein in case of determining that the computing power node enters the first state, moving the computing power node to the available computing power resource pool comprises: in case that the state indication information indicates that the computing power node starts to provide computing power services, moving the computing power node to the available computing power resource pool;
and/or
in case of determining that the computing power node enters the second state, moving the computing power node to the backup computing power resource pool comprises: in case that the state indication information indicates that the computing power node stops providing computing power services, moving the computing power node to the backup computing power resource pool.

8. The method of claim 5, 6, or 7, further comprising:
determining a buffer period.

9. The method of claim 8, wherein moving the computing power node to the backup computing power resource pool comprises:
in case that the buffer period ends, moving the computing power node to the backup computing power resource pool.

10. The method of claim 8 or 9, wherein determining the buffer period comprises:
determining a first time as a starting time of the buffer period, and determining a first buffer duration as a duration of the buffer period.

11. The method of claim 8 or 9, wherein determining the buffer period comprises:
obtaining a second buffer duration based on computing tasks of the computing power node;
transmitting node update response information to the computing power node, wherein the node update response information is at least used to indicate the second buffer duration;
receiving, at a second time, node update confirmation information transmitted from the computing power node, wherein the node update confirmation information is at least used to indicate a third buffer duration, and the third buffer duration is determined based on the second buffer duration; and
determining a first time or the second time as a starting time of the buffer period, and determining the third buffer duration as a duration of the buffer period.

12. A computing power network management function, comprising: a memory, a transceiver and a processor;
wherein the memory is used for storing a computer program; the transceiver is used for receiving and transmitting data under control of the processor; and the processor is used for reading the computer program in the memory and performing the following operations:
determining a change of a state of a computing power node, wherein the state comprises a first state or a second state, the first state is used to indicate that the computing power node provides computing power services, and the second state is used to indicate that the computing power node does not provide computing power services; and
in case of determining that the computing power node enters the first state, moving the computing power node to an available computing power resource pool; and/or, in case of determining that the computing power node enters the second state, moving the computing power node to a backup computing power resource pool;
wherein computing power nodes in the available computing power resource pool and computing power nodes in the backup computing power resource pool have completed registration in the computing power network management function, and the computing power nodes in the available computing power resource pool are used to provide computing power services.

13. The computing power network management function of claim 12, wherein determining the change of the state of the computing power node comprises:
determining the change of the state of the computing power node based on computing power service condition information of the computing power node;
wherein the computing power service condition information of the computing power node is used to indicate at least one of the following:
the computing power node provides computing power services during a computing power service validity period; or
the computing power node provides computing power services within a computing power service validity area.

14. The computing power network management function of claim 13, wherein the computing power service validity period is determined based on at least one of the following:
a starting time of the computing power service validity period;
an ending time of the computing power service validity period;
a duration of the computing power service validity period;
a length of a computing power service cycle, wherein one computing power service cycle comprises one computing power service validity period;
an interval length between any two adjacent computing power service cycles; or
a quantity of cycle times of a computing power service cycle.

15. The computing power network management function of claim 14, wherein in case of determining that the computing power node enters the first state, moving the computing power node to the available computing power resource pool comprises one or more of the following: at the starting time of the computing power service validity period, moving the computing power node to the available computing power resource pool; or, at a starting time of the computing power service cycle, moving the computing power node to the available computing power resource pool;
and/or
in case of determining that the computing power node enters the second state, moving the computing power node to the backup computing power resource pool comprises one or more of the following: in case that the computing power node completes registration in the computing power network management function but is not within the computing power service validity period, moving the computing power node to the backup computing power resource pool; at the ending time of the computing power service validity period, moving the computing power node to the backup computing power resource pool; or, at an ending time of the computing power service cycle, moving the computing power node to the backup computing power resource pool.

16. The computing power network management function of claim 13, wherein in case that the computing power service condition information of the computing power node is used to indicate that the computing power node provides computing power services within the computing power service validity area:
in case of determining that the computing power node enters the first state, moving the computing power node to the available computing power resource pool comprises: in case that the computing power node enters the computing power service validity area, moving the computing power node to the available computing power resource pool;
and/or
in case of determining that the computing power node enters the second state, moving the computing power node to the backup computing power resource pool comprises one or more of the following: in case that the computing power node completes registration in the computing power network management function but is not within the computing power service validity area, moving the computing power node to the backup computing power resource pool; or, in case that the computing power node leaves the computing power service validity area, moving the computing power node from the available computing power resource pool to the backup computing power resource pool.

17. The computing power network management function of claim 12, wherein determining the change of the state of the computing power node comprises:
receiving a node update request transmitted from the computing power node at a first time; and
based on the node update request, determining at least one of the following:
state indication information, or a first buffer duration;
wherein the state indication information is used to indicate that the computing power node starts to provide computing power services, or the computing power node stops providing computing power services.

18. The computing power network management function of claim 17, wherein in case of determining that the computing power node enters the first state, moving the computing power node to the available computing power resource pool comprises: in case that the state indication information indicates that the computing power node starts to provide computing power services, moving the computing power node to the available computing power resource pool;
and/or in case of determining that the computing power node enters the second state, moving the computing power node to the backup computing power resource pool comprises: in case that the state indication information indicates that the computing power node stops providing computing power services, moving the computing power node to the backup computing power resource pool.

19. The computing power network management function of claim 16, 17, or 18, wherein the operations further comprise:
determining a buffer period.

20. The computing power network management function of claim 19, wherein moving the computing power node to the backup computing power resource pool comprises:
in case that the buffer period ends, moving the computing power node to the backup computing power resource pool.

21. The computing power network management function of claim 19 or 20, wherein determining the buffer period comprises:
determining a first time as a starting time of the buffer period, and determining a first buffer duration as a duration of the buffer period.

22. The computing power network management function of claim 19 or 20, wherein determining the buffer period comprises:
obtaining a second buffer duration based on computing tasks of the computing power node;
transmitting node update response information to the computing power node, wherein the node update response information is at least used to indicate the second buffer duration;
receiving, at a second time, node update confirmation information transmitted from the computing power node, wherein the node update confirmation information is at least used to indicate a third buffer duration, and the third buffer duration is determined based on the second buffer duration; and
determining a first time or the second time as a starting time of the buffer period, and determining the third buffer duration as a duration of the buffer period.

23. An apparatus for computing power node management, comprising:
a state determining module, used for determining a change of a state of a computing power node, wherein the state comprises a first state or a second state, the first state is used to indicate that the computing power node provides computing power services, and the second state is used to indicate that the computing power node does not provide computing power services; and
a node moving module, used for moving the computing power node to an available computing power resource pool in case of determining that the computing power node enters the first state; and/or, moving the computing power node to a backup computing power resource pool in case of determining that the computing power node enters the second state;
wherein computing power nodes in the available computing power resource pool and computing power nodes in the backup computing power resource pool have completed registration in a computing power network management function, and the computing power nodes in the available computing power resource pool are used to provide computing power services.

24. The apparatus of claim 23, wherein the state determining module is used for:
determining the change of the state of the computing power node based on computing power service condition information of the computing power node;
wherein the computing power service condition information of the computing power node is used to indicate at least one of the following:
the computing power node provides computing power services during a computing power service validity period; or
the computing power node provides computing power services within a computing power service validity area.

25. The apparatus of claim 24, wherein the computing power service validity period is determined based on at least one of the following:
a starting time of the computing power service validity period;
an ending time of the computing power service validity period;
a duration of the computing power service validity period;
a length of a computing power service cycle, wherein one computing power service cycle comprises one computing power service validity period;
an interval length between any two adjacent computing power service cycles; or
a quantity of cycle times of a computing power service cycle.

26. The apparatus of claim 25, wherein the node moving module is used for performing at least one of the following:
in case that the computing power node completes registration in the computing power network management function but is not within the computing power service validity period, moving the computing power node to the backup computing power resource pool;
at the starting time of the computing power service validity period, moving the computing power node to the available computing power resource pool;
at the ending time of the computing power service validity period, moving the computing power node to the backup computing power resource pool;
at a starting time of the computing power service cycle, moving the computing power node to the available computing power resource pool; or
at an ending time of the computing power service cycle, moving the computing power node to the backup computing power resource pool.

27. The apparatus of claim 24, wherein in case that the computing power service condition information of the computing power node is used to indicate that the computing power node provides computing power services within the computing power service validity area, the node moving module is used for performing one or more of the following:
in case that the computing power node completes registration in the computing power network management function but is not within the computing power service validity area, moving the computing power node to the backup computing power resource pool;
in case that the computing power node enters the computing power service validity area, moving the computing power node to the available computing power resource pool; or
in case that the computing power node leaves the computing power service validity area, moving the computing power node from the available computing power resource pool to the backup computing power resource pool.

28. The apparatus of claim 23, wherein the state determining module is used for:
receiving a node update request transmitted from the computing power node at a first time; and
based on the node update request, determining at least one of the following:
state indication information, or a first buffer duration;
wherein the state indication information is used to indicate that the computing power node starts to provide computing power services, or the computing power node stops providing computing power services.

29. The apparatus of claim 28, wherein the node moving module is used for:
in case that the state indication information indicates that the computing power node starts to provide computing power services, moving the computing power node to the available computing power resource pool;
and/or
in case that the state indication information indicates that the computing power node stops providing computing power services, moving the computing power node to the backup computing power resource pool.

30. The apparatus of claim 27, 28, or 29, further comprising:
a buffer period determining module, used for determining a buffer period.

31. The apparatus of claim 30, wherein the node moving module is used for:
in case that the buffer period ends, moving the computing power node to the backup computing power resource pool.

32. The apparatus of claim 30 or 31, wherein the buffer period determining module is used for:
determining a first time as a starting time of the buffer period, and determining a first buffer duration as a duration of the buffer period.

33. The apparatus of claim 30 or 31, wherein the buffer period determining module is used for:
obtaining a second buffer duration based on computing tasks of the computing power node;
transmitting node update response information to the computing power node, wherein the node update response information is at least used to indicate the second buffer duration;
receiving, at a second time, node update confirmation information transmitted from the computing power node, wherein the node update confirmation information is at least used to indicate a third buffer duration, and the third buffer duration is determined based on the second buffer duration; and
determining a first time or the second time as a starting time of the buffer period, and determining the third buffer duration as a duration of the buffer period.

34. A processor readable storage medium, wherein the processor readable storage medium stores a computer program for causing a processor to perform any of the methods of claims 1 to 11.
